# EUROPEAN PATENT APPLICATION

(11) **EP 4 557 107 A1**
(43) Date of publication of application: **21.05.2025**
(21) Application number: 24212094.7
(22) Date of filing: 11.11.2024
(51) Int. Cl.: G06F 12/02, G06F 12/0862, G06F 12/0868

(54) **SYSTEM AND METHOD FOR APPLICATION AGNOSTIC DEVICE CACHE FOR TIERED MEMORY DEVICE**

(30) Priority: 14.11.2023 US 202363598944 P; 27.06.2024 US 202418757476
(71) Applicant: Samsung Electronics Co., Ltd., Suwon-si, Gyeonggi-do 16677 (KR)
(72) Inventor: KACHARE, Ramdas, San Jose, CA 95134 (US); SOLTANIYEH, Mohammadreza, San Jose, CA 95134 (US); LAU, Jimmy, San Jose, CA 95134 (US); HUEN, Hingkwan, San Jose, CA 95134 (US)
(74) Representative: Kuhnen & Wacker Patent- und Rechtsanwaltsbüro PartG mbB

(57) **Abstract**

A tiered memory device is disclosed. The tiered memory device may include a first memory and a second memory. A monitoring circuit may monitor the first memory to generate a heat map and a miss map based at least in part on a request received from a processor. A policy engine may evict a first data from the first memory to the second memory and may prefetch a second data from the second memory to the first memory based at least in part on the heat map and the miss map.

## Description

### FIELD

The disclosure relates generally to memory and storage, and more particularly to improving cache performance in a memory device.

### BACKGROUND

Increasing the amount of memory in a computer system may be expensive. Fast storage, such as Dynamic Random Access Memory (DRAM) tends to be more expensive on a per-unit basis than other costs of storage, such as hard disk drives or Solid State Drives. But as applications demand access to more and more data, the need to provide rapid access to these larger amounts of data may require adding additional DRAM to computer systems, driving up costs.

A need remains to support faster data access.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a machine including a memory device to store data, according to embodiments of the disclosure.
FIG. 2 shows details of the machine of FIG. 1, according to embodiments of the disclosure.
FIG. 3 shows details of the tiered memory device of FIG. 1, according to embodiments of the disclosure.
FIG. 4 shows details of the address range exposed by the tiered memory device of FIG. 1 to the processor of FIG. 1, according to embodiments of the disclosure.
FIG. 5 shows details of information tracked by the tiered memory device of FIG. 1, according to embodiments of the disclosure.
FIG. 6 shows a graph tracking the heat information of FIG. 5 and the miss information of FIG. 5 "for the tiered memory device of FIG. 1, according to embodiments of the disclosure.
FIG. 7 shows a sequence of operations performed by the tiered memory device of FIG. 1, according to embodiments of the disclosure.
FIG. 8 shows details of the process for updating access and miss counts in the tiered memory device of FIG. 1, according to embodiments of the disclosure.
FIG. 9 shows details of the process for calculating the average access rates and average miss rates of FIG. 5 and for generating the heat map and miss map of FIG. 5 in the tiered memory device of FIG. 1, according to embodiments of the disclosure.
FIG. 10A shows a flowchart of an example procedure for the tiered memory device of FIG. 1 to generate the heat and miss maps of FIG. 5, according to embodiments of the disclosure.
FIG. 10B continues the flowchart of FIG. 10A of an example procedure for the tiered memory device of FIG. 1 to generate the heat and miss maps of FIG. 5, according to embodiments of the disclosure.
FIG. 11 shows a flowchart of an example procedure for the tiered memory device of FIG. 1 to calculate the heat and miss information of FIG. 5, according to embodiments of the disclosure.
FIG. 12 shows a flowchart of an example procedure for the tiered memory device of FIG. 1 to expose the address range of FIG. 4 to the processor of FIG. 1 and to identify the regions of FIG. 4 in the address range of FIG. 4, according to embodiments of the disclosure.
FIG. 13 shows a flowchart of an example procedure for the tiered memory device of FIG. 1 to reset the access and miss counts of FIG. 5, according to embodiments of the disclosure.
FIG. 14 shows a flowchart of an example procedure for the tiered memory device of FIG. 1 to account for the access request of FIG. 7 from the processor of FIG. 1, according to embodiments of the disclosure.
FIG. 15 shows a flowchart of an example procedure for the tiered memory device of FIG. 1 to generate the heat map of FIG. 5, according to embodiments of the disclosure.
FIG. 16 shows a flowchart of an example procedure for the tiered memory device of FIG. 1 to generate the miss map of FIG. 5, according to embodiments of the disclosure.
FIG. 17 shows a flowchart of an example procedure for the policy engine of FIG. 3 to use the heat and miss maps of FIG. 5, according to embodiments of the disclosure.

### SUMMARY

A tiered memory device may include a first memory and a second memory. A monitoring circuit may track accesses of data and misses in the first memory to generate heat and miss maps.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Different types of memory may have different performance characteristics, such as latency or access time. At one end are slower forms of storage, such as hard disk drives and Solid State Drives (SSDs), with access times typically between 5-10 milliseconds (ms) for hard disk drives and between 25-100 microseconds (µs) for SSDs. Faster forms of storage may include, for example, Dynamic Random Access Memory (DRAM) and processor caches, with access times typically around 60 nanoseconds (ns) for DRAM and 1-20 ns for processor caches, depending on the cache level.

But each type of memory has an associated cost, and typically the cost increases on a per-unit basis the faster the memory operates. For example, typical prices for DRAM in 2023 are between $1.00 and $3.00 per gigabyte (GB), depending on the size of the module and its speed. In contrast, SSDs typically cost around $0.06 per GB, and hard disk drives typically cost around $0.014 per GB. Thus, on a cost-per-GB basis, SSDs and hard disk drives are considerably more affordable than DRAM. But for fast access of data by applications, the speed of DRAM is an important consideration.

Tiered memory solutions, such as those that use Compute Express Link^{®} (CXL^{®}) or other cache-coherent interconnect system protocols, allow host processors and applications to access large amounts of data, without necessarily increasing the amount of fast storage used. (Compute Express Link and CXL are registered trademarks of the Compute Express Link Consortium in the United States.) For example, a tiered memory solution may include a (relatively) smaller amount of DRAM and a (relatively) larger amount of flash storage. As applications need access to the data, the data may be moved between the flash storage and the DRAM: once in DRAM, the application may access the data relatively quickly. The tiered memory solution appears to the application as a large block of memory, and handles the movement of data between flash storage and DRAM as needed, with the application unaware of whether any given datum is currently in DRAM or not.

But because tiered memory solutions rely on slower forms of storage to store most of the data, and move data into faster forms of storage when needed, an application may request data that is not currently in the faster storage. The tiered memory solution may respond by moving or copying the data from the slower storage to the faster storage, then returning the data to the application. Thus, the first access to the data may be relatively slow, although later accesses may be faster. Often, this data movement may also involve evicting an existing data from the faster storage to make room for the new data.

Embodiments of the disclosure recognize that prefetching data from the slower storage to the faster storage may ameliorate the delay in the first access of the data. Embodiments of the disclosure may support such prefetching by maintaining heat and miss maps for regions of addresses exposed by the tiered memory solution. By tracking heat and miss maps, embodiments of the disclosure may support improved eviction and prefetching in the device cache.

Regions that are considered cool may have relatively low access rates; regions that are considered hot may have relatively high access rates. Similarly, regions that have low miss rates may include data that of localized interest (the data in the faster storage continues to be used rather than other data in the region), whereas regions that have high miss rates may include data of broader interest (other data in the region than what is generally in the faster storage may be of used). Thus, region temperature and region miss rates may affect how aggressively data may be evicted from the faster storage and/or prefetched from the slower storage. Any desired algorithms may be used to select what data is evicted and/or what data is prefetched.

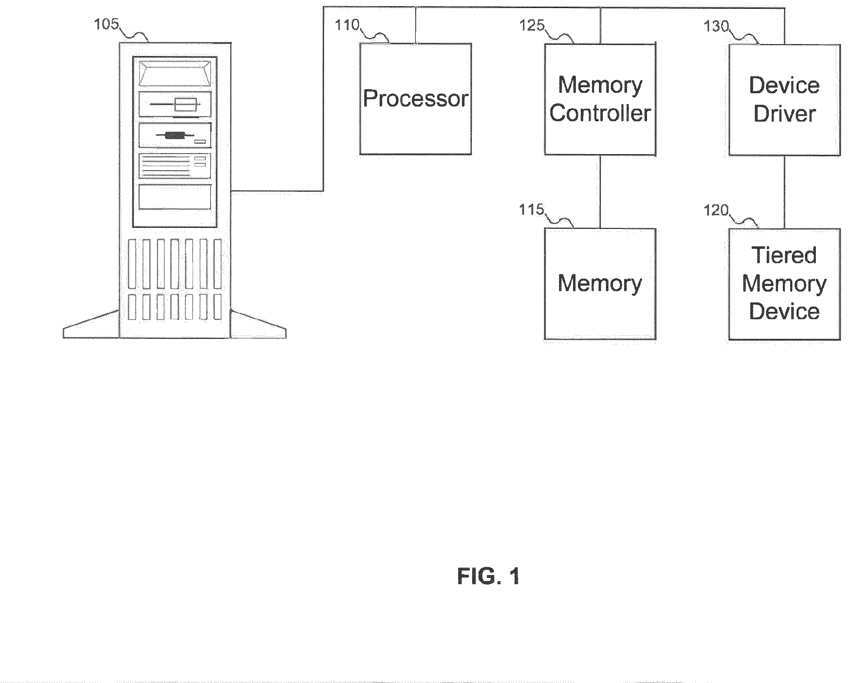

FIG. 1 shows a machine including a memory device to store data, according to embodiments of the disclosure. In FIG. 1, machine 105, which may also be termed a host or a system, may include processor 110, memory 115, and memory device 120. Processor 110 may be any variety of processor. Processor 110 may also be called a host processor. (Processor 110, along with the other components discussed below, are shown outside the machine for ease of illustration: embodiments of the disclosure may include these components within the machine.) While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM), flash memory, etc. Memory 115 may be a volatile or non-volatile memory, as desired. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115.

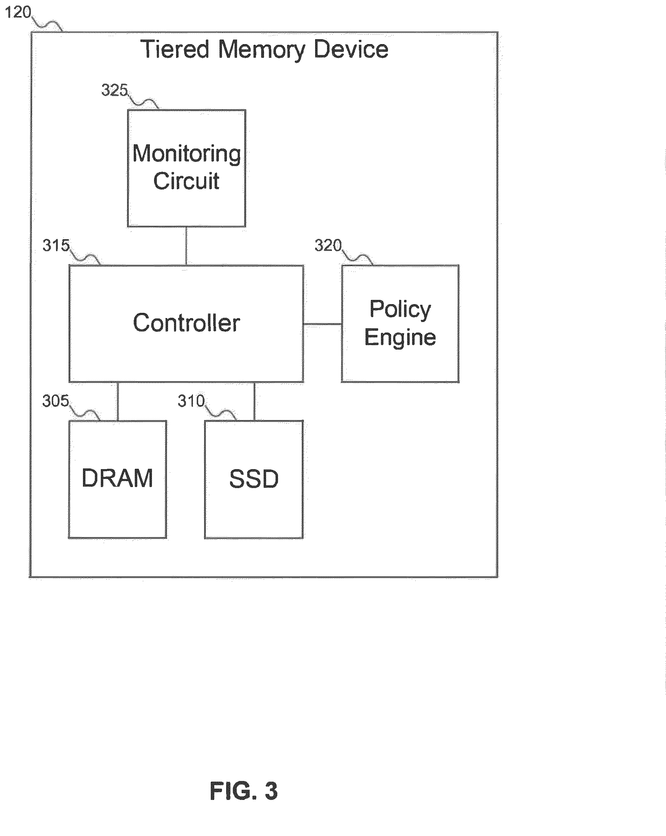

Tiered memory device 120 may be used to extend memory 115. That is, memory 115 may consist of one form of memory, whereas tiered memory device 120 may include another form of memory. Processor 110 may see memory 115 and tiered memory device 120 as one large region of memory. For example, tiered memory device 120 may use a cache-coherent interconnect protocol, such as Compute Express Link^{™} (CXL^{™}) protocols. (Compute Express Link and CXL are trademarks of the CXL Consortium in the United States.) CXL protocols may include various protocols that may be used to access data from tiered memory device 120 as though tiered memory device 120 was part of memory 115. Tiered memory device 120 may use a persistent storage, such as a storage device, to store data that may be termed "long-term": that is, data that is expected to be stored for longer periods of time, or that does not need to be stored in memory 115. Tiered memory device 120 may be accessed using device driver 130. While FIG. 1 shows one tiered memory device 120, there may be any number (one or more) of tiered memory devices in machine 105. Tiered memory device 120 is discussed further with reference to FIG. 3 below.

Machine 105 may also include one or more storage devices (not shown in FIG. 1). A storage device may also be used to store data that may be termed "long-term": that is, data that is expected to be stored for longer periods of time, or that does not need to be stored in memory 115. Storage devices may also be accessed using device drivers.

Embodiments of the disclosure may include any desired mechanism to communicate with tiered memory device 120. For example, tiered memory device 120 may connect to one or more busses, such as a Peripheral Component Interconnect Express (PCIe) bus, or tiered memory device 120 may include Ethernet interfaces or some other network interface. Other potential interfaces and/or protocols to tiered memory device 120 may include Non-Volatile Memory Express (NVMe), NVMe over Fabrics (NVMe-oF), Remote Direct Memory Access (RDMA), Transmission Control Protocol/Internet Protocol (TCP/IP), Universal Flash Storage (UFS), embedded MultiMediaCard (eMMC), InfiniBand, Serial Attached Small Computer System Interface (SCSI) (SAS), Internet SCSI (iSCSI), Serial AT Attachment (SATA), and cache-coherent interconnect protocols, such as the CXL protocols, among other possibilities.

While the above discussion uses the generic term "storage device", embodiments of the disclosure may include any storage device formats that may benefit from prefetching data into a faster form of storage, examples of which may include hard disk drives (HDDs) and Solid State Drives (SSDs), as well as any memory media such as random access memory, flash storage, magnetic storage, or other forms of memory. Any reference to "SSD" below should be understood to include such other embodiments of the disclosure.

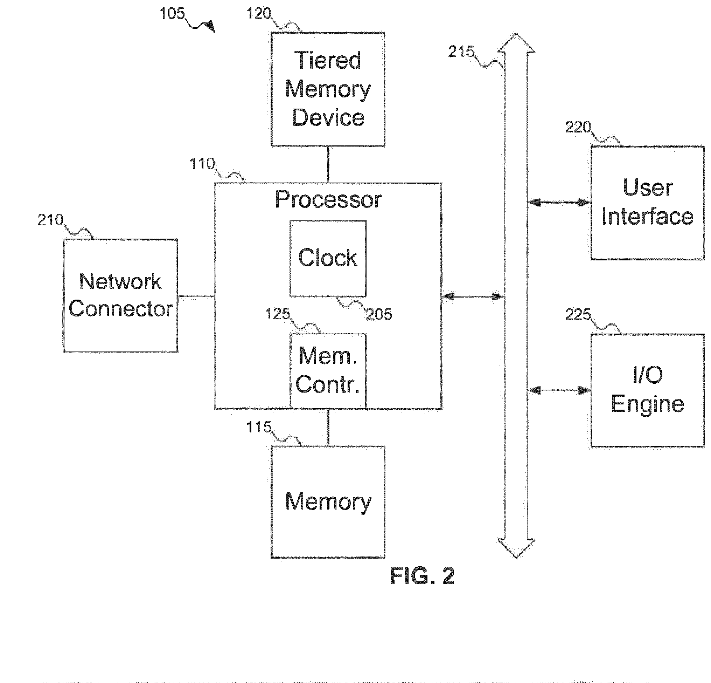

FIG. 2 shows details of the machine of FIG. 1, according to embodiments of the disclosure. In FIG. 2, typically, machine 105 includes one or more processors 110, which may include memory controllers 125 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to memory devices 120, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

FIG. 3 shows details of tiered memory device 120 of FIG. 1, according to embodiments of the disclosure. In FIG. 3, tiered memory device 120 is shown as including both DRAM 305 and SSD 310. More generally, DRAM 305 may be thought of as a first memory element, or just a first memory, and SSD 310 may be thought of as a second memory element, or just a second memory. In some embodiments of the disclosure, one of the two memory elements may be a persistent, or non-volatile, storage device, such as SSD 310, where data may be stored without loss of data even if power is interrupted. While FIG. 3 shows tiered memory device 120 as including DRAM 305 and SSD 310 specifically, embodiments of the disclosure may include any variety of memory elements. Other examples of memories that may be included in tiered memory device 120 may include a CXL SSD configured to be accessed using memory protocols, a CXL SSD configured to be accessed using both memory and storage device protocols, a CXL SSD configured to be accessed using storage device protocols, an NVMe SSD, and a hard disk drive, any of which might be considered the first memory or the second memory (although typically the memory device supporting relatively faster access may be considered the first memory and the memory device supporting relatively slower access may be considered the second memory). Other types of memories may also be used in tiered memory device 120 of FIG. 1. In the remainder of this document, any reference to DRAM 305 may be understood to refer generically to a first memory, and any reference to SSD 310 may be understood to refer generically to a second memory.

Typically, DRAM 305 may be a form of memory suited for relatively faster access, whereas SSD 310 may be relatively slower than DRAM 305. On the other hand, because the cost of relatively faster memory elements may be more expensive, it may be expected that SSD 310 may be larger in capacity than DRAM 305. Together, DRAM 305 and SSD 310 may be viewed by processor 110 of FIG. 1 as a single large memory element.

Controller 315 may be responsible for managing access to data from DRAM 305 and SSD 310. That is, as processor 110 of FIG. 1 issues requests to access data, controller 315 may determine where the data in question is stored and may access the data as requested. For example, if the data is stored on SSD 310, controller 315 may include additional memory to manage a flash translation layer table that may map a logical address used by processor 110 of FIG. 1 to a physical address on SSD 310, and may then access the data from that physical address on SSD 310.

Since DRAM 305 is typically faster than SSD 310, it is desirable that data, when requested by processor 110 of FIG. 1, be accessed from DRAM 305. But because DRAM 305 is typically smaller than SSD 310, not all the data from SSD 310 may be stored in DRAM 305 at any one time. Thus, DRAM 305 may act as a cache for data from SSD 310: data may be fetched from SSD 310 into DRAM 305 as needed, and evicted from DRAM 305 back to SSD 310 to make room for other data.

Because tiered memory device 120 appears to processor 110 of FIG. 1 as a large memory, without processor 110 of FIG. 1 being aware that tiered memory device 120 includes both DRAM 305 and SSD 310, tiered memory device 120 may expose an address range to processor 110 of FIG. 1 that may represent any possible address accessible from tiered memory device 120. Typically, this address range may be as large as SSD 310, but in other embodiments of the disclosure, the exposed address range may be larger or smaller than SSD 310.

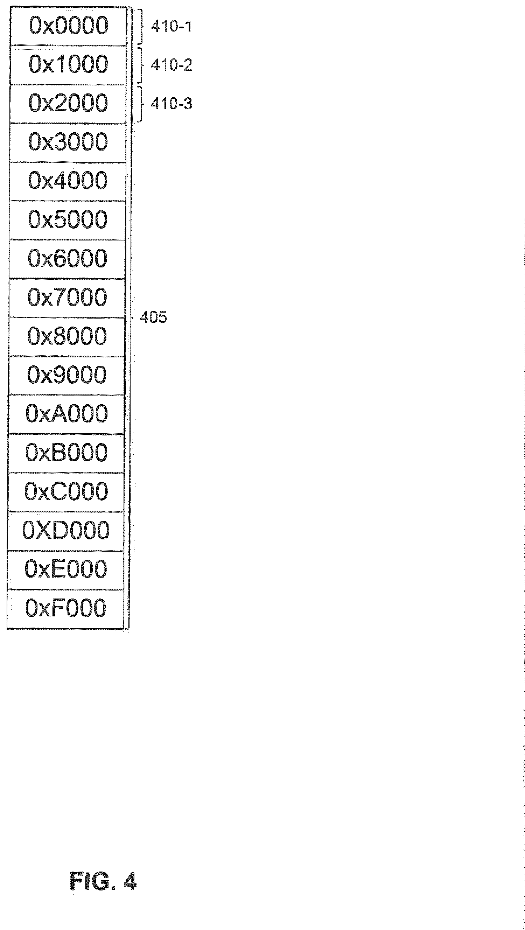

FIG. 4 shows details of the address range exposed by tiered memory device 120 of FIG. 1 to processor 110 of FIG. 1, according to embodiments of the disclosure. In FIG. 4, a total of 65,536 bytes of memory are shown, ranging from hex address 0x0000 through 0xFFFF. In practice, the size of tiered memory device 120 of FIG. 1 may be much larger, but for illustrative purposes a small sized memory will suffice. Address range 405 may include all the possible addresses exposed by tiered memory device 120 of FIG. 1 to processor 110 of FIG. 1, and processor 110 of FIG. 1 may request access to any address in address range 405, just as processor 110 of FIG. 1 may request access to any address in memory 115 of FIG. 1.

Note that while FIG. 4 shows address range 405 starting at address 0x0000, tiered memory device 120 of FIG. 1 may communicate with other elements of machine 105 of FIG. 1 to be assigned an address range that does not conflict with any other elements (such as memory 115 of FIG. 1), and address range 405 might therefore start at a different address than 0x0000.

Returning to FIG. 3, by exposing address range 405 of FIG. 4 to be as large as SSD 310, processor 110 of FIG. 1 may request access to any address in SSD 310. This arrange may mirror that of memory 115 of FIG. 1 and a cache in processor 110 of FIG. 1, where data may be copied from memory 115 of FIG. 1 into the processor cache for faster access: data may be copied from SSD 310 into DRAM 305 for faster access by processor 110 of FIG. 1. In some embodiments of the disclosure, DRAM 305 may function as a set associative cache, where certain addresses associated with SSD 310 may be stored in certain locations in DRAM 305; in other embodiments of the disclosure, DRAM 305 may function as a fully associative cache or a direct mapped cache.

Tiered memory device 120 may also include policy engine 320. Policy engine 320 may be any policy engine, and may be responsible for determining what data to prefetch from SSD 310 into DRAM 305, in anticipation of future accesses by processor 110 of FIG. 1. Policy engine 320 may also be responsible for determining what data to evict from DRAM 305 (and which may involve writing data back to SSD 310, if the data being evicted from DRAM 305 has been updated). Policy engine 320 might be as simple as a Least Recently Used (LRU) or a Least Frequently Used (LFU) eviction engine to select what data to evict from DRAM 305, or policy engine 320 might be more complicated. An example policy engine 320 that may be used is described in U.S. Patent Application Serial No. 18/515,218, filed November 20, 2023, now pending, which claims the benefit of U.S. Provisional Patent Application Serial No. 63/452,691, filed March 16, 2023, both of which are incorporated by reference herein for all purposes. In general, the details of policy engine 320 may be outside the scope of this disclosure, except that policy engine 320 may factor in information provided by monitoring circuit 325, as discussed below.

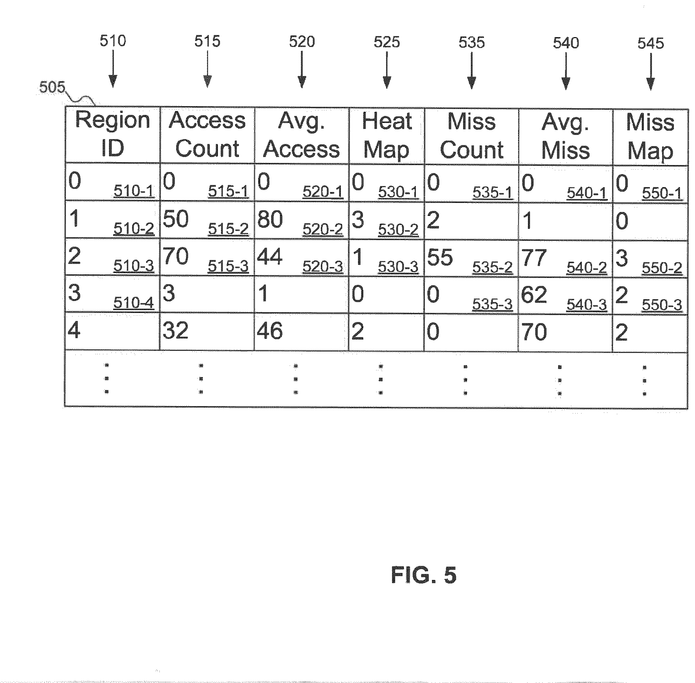

Monitoring circuit 325 may be responsible for providing policy engine 320 with information about what data is being accessed by processor 110 of FIG. 1 and whether the data being requested by processor 110 of FIG. 1 is found in DRAM 305 or not. To that end, monitoring circuit 325 may track how often processor 110 of FIG. 1 requests data from tiered memory device 120 (accesses) and how often the data requested by processor 110 of FIG. 1 is not found in DRAM 305 (misses). This information may be provided in the form of a heat map and a miss map, as described with reference to FIG. 5 below.

In FIG. 3, controller 315, policy engine 320, and monitoring circuit 325 are shown as three separate elements. But in some embodiments of the disclosure, these elements may be combined in any desired manner. For example, a single unit might implement controller 315, policy engine 320, and monitoring circuit 325. Or, policy engine 320 and/or monitoring circuit 325 might be implemented externally to tiered memory device 120. Embodiments of the disclosure are intended to cover all such variations.

As tiered memory device 120 includes hardware elements, such as physical elements for DRAM 305 and SSD 310, controller 315, policy engine 320, and monitoring circuit 325 may also be implemented using any desired hardware. Thus, controller 315, policy engine 320, and monitoring circuit 325 may be implemented using a Field Programmable Gate Array (FPGA), an Application-Specific Integrated Circuit (ASIC), a System-on-a-Chip (SoC), a general processor, a Central Processing Unit (CPU), a Graphics Processing Unit (GPU), a General Purpose GPU (GPGPU), a Tensor Processing Unit (TPU), or a Neural Processing Unit (NPU), among other possibilities. Where the hardware may be more generic (such as a general processor or a CPU), appropriate software may be loaded onto the hardware to execute the desired instructions. In addition, controller 315, policy engine 320, and monitoring circuit 325 may be implemented using different hardware implementations.

In some embodiments of the disclosure, monitoring circuit 325 may consider address range 405 of FIG. 4 to be a single unit, with all addresses in address range 405 of FIG. 4 handled identically. If address range 405 of FIG. 4 is relatively small, this may be acceptable. But typically, the size of tiered memory device 120 may be sufficiently large that different portions of address range 405 of FIG. 4 may be monitored separately.

Returning to FIG. 4, address range 405 is shown as subdivided into regions 410-1, 410-2, and 410-3, among others, which may be referred to collectively as regions 410. For simplicity, each region 410 may be the same size. That way, monitoring circuit 325 of FIG. 3 may determine which region is affected by an access request simply by dividing the requested address by the size of a region (or, if the size of a region is a power of two, by shifting the address an appropriate number of bits to the right), which returns a region identifier. For example, if processor 110 of FIG. 1 issues a request for address 0x2F00, 0x2F00 ÷ 0x1000 = 2, indicating that address 0x2F00 lies in region 410-3 (assuming region numbers start at zero). But more generally, embodiments of the disclosure may have regions 410 of differing sizes, with the added element of tracking what each region size is.

In general, the sizes of regions 410 may be any desired size, from one byte to as large as address range 405. But there may be some practical limits. First, having the size of regions 410 be as large as address range 405 renders regions 410 unnecessary. Thus, regions 410 may typically be no larger than half the size of address range 405, and typically may be rather smaller: for example, 100 megabytes (MB). Second, the second memory may have some limits on how small a chunk of data may be accessed. For example, SSD 310 of FIG. 3 might have the minimum size of data to be read as one page, which might be, for example, 4 kilobytes (KB) in size. Since SSD 310 of FIG. 3 may expect that the minimum data to be read is 4 KB, there is little benefit to regions 410 being smaller than this minimum read size.

Other factors to consider may include that tracking each region separately may require additional storage for the information used by monitoring circuit 325 of FIG. 3. Monitoring circuit 325 of FIG. 3 may include some storage for the data it uses, or monitoring circuit may use an external memory (not shown in FIG. 3) or storage within DRAM 305 of FIG. 3 or SSD 310 of FIG. 3 for its data. The size of the memory available to monitoring circuit 325 of FIG. 3 may factor into how small or large regions 410 may be.

FIG. 5 shows details of information tracked by tiered memory device 120 of FIG. 1, according to embodiments of the disclosure. In FIG. 5, table 505 is shown. Table 505 includes various columns that may track information of relevance to monitoring circuit 325 of FIG. 3.

Table 505 may include region identifiers 510, such as region identifiers 510-1, 510-2, and 510-3, which may correspond to regions 410-1, 410-2, and 410-3 of FIG. 4. In general, for each region 410 of FIG. 4, there may be a corresponding region identifier 510. Note that in embodiments of the disclosure where region 410 of FIG. 4 may be identified by simply dividing the address of the request of processor 110 of FIG. 1 by the size of regions 410 of FIG. 4 (or by shifting an appropriate number of bits), region identifiers 510 may be unnecessary and may be omitted from table 505. In situations where the size of a region is a power of two, given a particular address of the request of processor 110 of FIG. 1, region identifiers 510 may be determined by shifting the address to the right an appropriate number of bits. Thus, if each region includes, for example, 4 KB, 4 KB may be represented as 2¹³, and region identifiers 510 may be determined by shifting the address 12 bits to the right (that is, discarding the 12 lowest order bits in the address), and if each region includes, for example, 64 KB, 64 KB may be represented as 2¹⁷, and region identifiers 510 may be determined by shifting the address 16 bits to the right.

Table 505 may also include access counts 515. Access counts 505 may track how many times processor 110 of FIG. 1 has requested access to data in a particular region ID 510. Thus, for example, access count 515-1 shows that processor 110 of FIG. 1 has not requested any data from region 410 of FIG. 4 identified by region identifier 510-1, access count 515-2 shows that processor 110 of FIG. 1 has requested data from region 410 of FIG. 4 identified by region identifier 510-2 50 times, access count 515-3 shows that processor 110 of FIG. 1 has requested data from region 410 of FIG. 4 identified by region identifier 510-3 70 times, and so on.

In some embodiments of the disclosure, access counts 515 may be reset periodically, and therefore may only track the number of accesses by processor 110 of FIG. 1 in a given interval of time. In such embodiments of the disclosure, the size of access counts 515 may be limited to the number of bits needed to store the maximum number of access requests that may be issued by processor 110 in a given interval. For example, if the selected interval is 1 millisecond (ms) and SSD 310 of FIG. 3 may process 80 input/output (I/O) requests per millisecond, then each access count 515 only needs seven bits (seven bits is enough to represent any value up to 128).

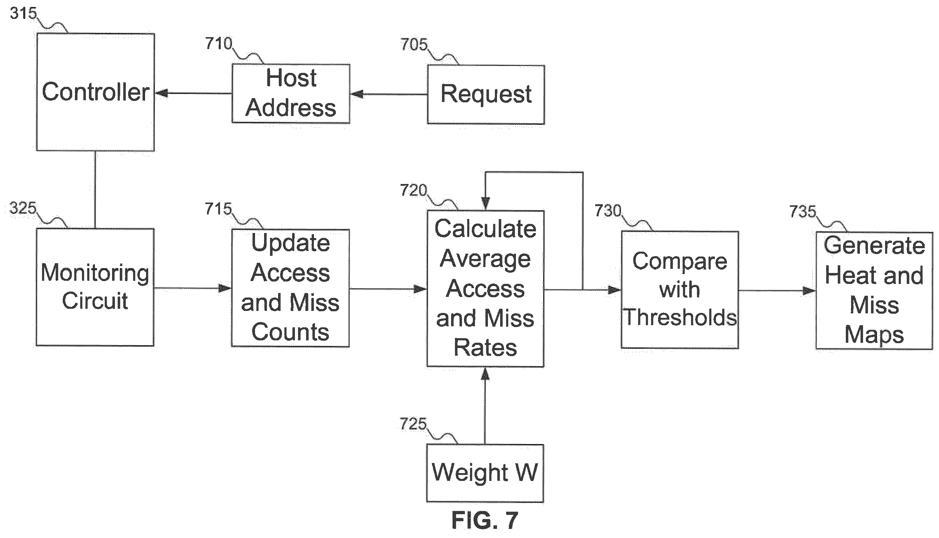

Table 505 may also include average access rates 520. As discussed with reference to FIG. 7 below, average access rates 520 may represent a rough approximation of the average rate of access of data from tiered memory device 120 over time, with more current data considered more relevant to the average than older data. Thus, for example, average access rate 520-1 indicates that region 410 of FIG. 4 identified by region identifier 510-1 has historically had no (or effectively no) accesses, average access rate 520-2 indicates that region 410 of FIG. 4 identified by region identifier 510-2 has historically had approximately 80 accesses per interval, average access rate 520-3 indicates that region 410 of FIG. 4 identified by region identifier 510-3 has had approximately 44 accesses per interval, and so on.

Since average access rates 520 are updated based on access counts 515, average access rates 520 might not be reset periodically. Nevertheless, in some embodiments of the disclosure, average access rates 520 may be bounded similarly to access counts 515. In such embodiments of the disclosure, the size of average access rates 520 may be limited to the number of bits needed to store the maximum number of access requests that may be issued by processor 110 in a given interval. Thus, if access counts 515 only need seven bits to store all possible values for access counts 515, then seven bits are all that is needed to store average access rates 520 as well.

Table 505 may also include heat map 525. Heat map 525 may include information about how "hot" or "cold" any data is. In general, "hot" data is data that is frequently accessed, whereas "cold" data is data that is infrequently (or never) accessed. For purposes of this discussion, heat map 525 is intended to refer to information about the temperature (how "hot" or "cold") a particular data value is, or more generally how "hot" or "cold" a portion, such as a region, of tiered memory device 120 of FIG. 1 may be. Thus, for example, heat map 525 may be a one-dimensional array, mapping region identifiers 510 to the temperatures of each region in tiered memory device 120 of FIG. 1. Embodiments of the disclosure may also include data structures other than a one-dimensional array or that shown in FIG. 5.

In the example shown in FIG. 5, the values of 0-3 are used in heat map 525, in increasing order of heat: zero means "cold" data, 3 means "hot" data, and 1 and 2 represent intermediary levels of heat. Monitoring circuit 325 of FIG. 3 may use average access rates 520 to help generate heat map 525: values for average access rates 520 that cross various thresholds may determine the temperatures used in heat map 525. In the example of FIG. 5, four values may be represented using two bits, helping to reduce the size of heat map 525. But embodiments of the disclosure may use any number of values to differentiate temperatures in heat map 525, with corresponding adjustments in the number of bits needed to store those values.

Note that while there might be a correspondence between average access rates 520 and temperatures in heat map 525, there is not necessarily a correspondence between a high access count 515 and a hot temperature in heat map 525. For example, access count 515-1 has a value of 0, indicating that there is no interest in data in region 410 of FIG. 1 identified by region identifier 510-1, and heat information 530-1 has the corresponding value indicating that the data is "cold". Access count 515-2 has a value of 50, which might be a relatively high access count for data in region 410 of FIG. 1 identified by region identifier 510-2, and heat information 530-2 has the corresponding value indicating that the data is "hot". But access count 515-3 has a value of 70, which might be an even higher number of accesses of data in region 410 of FIG. 1 identified by region identifier 510-3, even though heat information 530-3 indicates that the data in region 410 of FIG. 1 identified by region identifier 510-3 is relatively cool. This situation may occur for a couple of reasons. First, processor 110 of FIG. 1 might only have started expressing an interest in data from region 410 of FIG. 1 identified by region identifier 510-3 in the most recent interval, and heat map 525 might not yet have been adjusted to reflect that new interest in data in region 410 of FIG. 1 identified by region identifier 445-3. Second, as described with reference to FIG. 7 below, heat map 525 may be adjusted conservatively, to avoid rapid changes in heat map 525, and heat map 525 simply might not have "caught up" with how processor 110 of FIG. 1 is accessing data from region 410 of FIG. 1 identified by region identifier 510-3.

Table 505 may also include miss counts 535. For each access by processor 110 of FIG. 1 of data in regions 410 of FIG. 4, that data might be present in DRAM 305 of FIG. 3, or it might not. If the data is not currently in DRAM 305 of FIG. 3, then that data may need to be brought into DRAM 305 of FIG. 3 from SSD 310 of FIG. 3. This need to bring the data into DRAM 305 of FIG. 3 may be similar to how data may be brought into a processor cache from memory 115 of FIG. 1 when a cache miss occurs: miss counts 535 may track how many times access requests of data in regions 410 of FIG. 4 result in a miss for the data. Thus, for example, miss count 535-1 may reflect that no data requests in region 410 of FIG. 1 identified by region identifier 510-1 resulted in misses (which makes sense, since there were no access requests to data in region 410 of FIG. 1 identified by region identifier 510-1). On the other hand, miss count 535-2 may reflect that region 410 of FIG. 1 identified by region identifier 510-3 has experienced 55 misses of data.

In some embodiments of the disclosure, miss counts 535 may be reset periodically, and therefore may only track the number of accesses by processor 110 of FIG. 1 in a given interval of time. In such embodiments of the disclosure, the size of miss counts 535 may be limited to the number of bits needed to store the maximum number of access requests that may be issued by processor 110 in a given interval. For example, if the selected interval is 1 millisecond (ms) and SSD 310 of FIG. 3 may process 80 input/output (I/O) requests per millisecond, then each miss count 535 only needs seven bits (seven bits is enough to represent any value up to 128).

Table 505 may also include average miss rates 540. As discussed with reference to FIG. 7 below, average miss rates 540 may represent a rough approximation of the average rate of misses of data in DRAM 305 of FIG. 3 over time, with more current data considered more relevant to the average than older data. Thus, for example, average miss rate 540-1 indicates that region 410 of FIG. 4 identified by region identifier 510-1 has historically had no (or effectively no) misses, average access rate 540-2 indicates that region 410 of FIG. 4 identified by region identifier 510-3 has historically had approximately 77 misses per interval, average access rate 540-3 indicates that region 410 of FIG. 4 identified by region identifier 510-4 has had approximately 62 misses per interval, and so on.

Since average miss rates 540 are updated based on miss counts 535, average miss rates 540 might not be reset periodically. Nevertheless, in some embodiments of the disclosure, average miss rates 540 may be bounded similarly to miss counts 515. In such embodiments of the disclosure, the size of average miss rates 540 may be limited to the number of bits needed to store the maximum number of access requests that may be issued by processor 110 in a given interval. Thus, if miss counts 515 only need seven bits to store all possible values for miss counts 515, then seven bits are all that is needed to store average miss rates 540 as well.

Finally, table 505 may include miss map 545. Miss map 545 may include information about how frequent or infrequent data misses are in regions 410 of FIG. 1. In the example shown in FIG. 5, the values of 0-3 are used, in increasing order of miss rate: zero means that there are no (or few) data misses, 3 means there are many data misses, and 1 and 2 represent intermediary levels of data misses. Monitoring circuit 325 of FIG. 3 may use average miss rates 540 to help generate miss map 545: values for average miss rates 540 that cross various thresholds may determine the temperatures used in miss map 545. In the example of FIG. 5, four values may be represented using two bits, helping to reduce the size of miss map 545. But embodiments of the disclosure may use any number of values to differentiate levels of misses in miss map 545, with corresponding adjustments in the number of bits needed to store those values.

Note that while there might be a correspondence between average miss rates 540 and values in miss map 545, there is not necessarily a correspondence between a high miss count 535 and a high miss rate in miss map 545. For example, miss information 550-1 has a value of 0, indicating that there have been few or no misses in region 410 of FIG. 1 identified by region identifier 510-1: again, since there have been no requests of data from region 410 of FIG. 4 identified by region identifier 510-1, this makes sense. Similarly, miss information 550-1 has a value of 3, indicating that there have been a lot of misses in region 410 of FIG. 4 identified by region identifier 510-3, which jibes with miss count 535-2. On the other hand, while miss count 535-3 is zero, miss information 550-3 shows a value of two indicating that region 410 of FIG. 4 identified by region identifier 510-4 has had a relatively high miss rate. As with heat map 525, this "discrepancy" may be accounted for by the facts that miss map 545 might not yet have been updated to reflect current values of miss counts 535, and/or may maintain older values to conservatively update miss map 545.

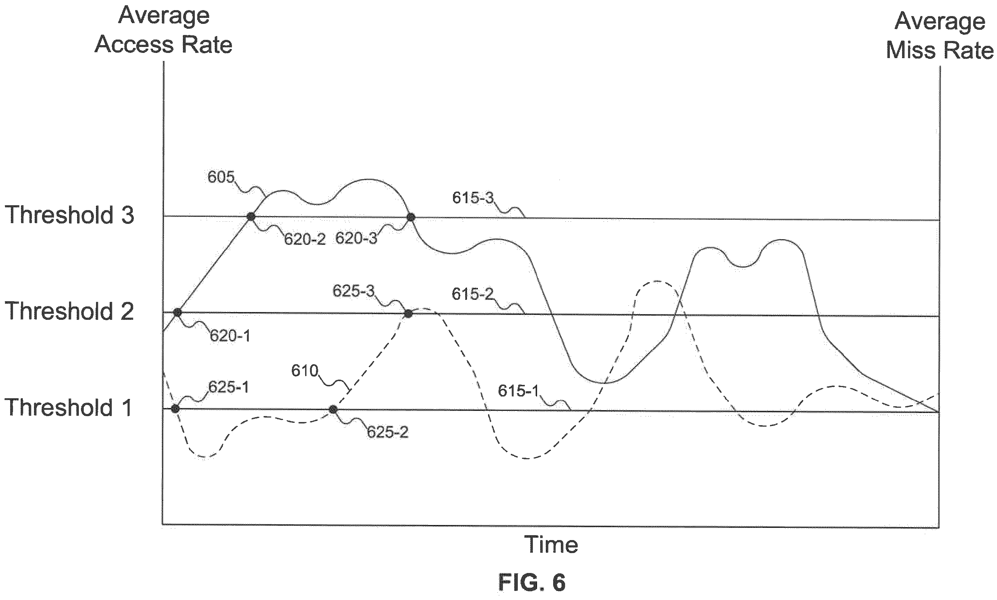

FIG. 6 shows a graph tracking heat information 525 of FIG. 5 and miss information 545 of FIG. 5 for tiered memory device 120 of FIG. 1, according to embodiments of the disclosure. In FIG. 6, graphs 605 and 610 are shown. Graph 605, with the solid line, may represent the average heat of a region 410 of FIG. 4 in tiered memory device 120 over time. As may be seen, the average heat of region 410 of FIG. 4 may vary over time. Graph 605 starts between thresholds 615-1 and 615-2, then crosses threshold 615-2 to be between thresholds 615-2 and 615-3 at point 620-1. Graph 605 then crosses threshold 615-3 at point 620-2, then crosses threshold 615-3 again at point 620-3, and so on.

Thresholds 615-1, 615-2, and 615-3, which may be referred to collectively as thresholds 615, may represent thresholds that differentiate between the various degrees of temperature used in heat map 525 of FIG. 5. For example, if the average access rate is below threshold 615-1, heat information 530 of FIG. 5 may be set to 0; if the average access rate is between thresholds 615-1 and 615-2, heat information 530 of FIG. 5 may be set to 1; if the average access rate is between thresholds 615-2 and 615-3, heat information 530 of FIG. 5 may be set to 2; and if the average access rate is above threshold 615-3, heat information 530 of FIG. 5 may be set to 3.

Similarly, graph 610, with the dashed line, may represent the average miss rate of a region 410 of FIG. 4 in tiered memory device 120 over time. As may be seen, the average miss rate of region 410 of FIG. 4 may vary over time. Graph 610 starts between thresholds 615-1 and 615-2, then crosses threshold 615-1 to be below threshold 615-1 at point 625-1. Graph 605 then recrosses threshold 615-1 at point 625-2, then crosses threshold 615-2 at point 625-3, and so on.

Thresholds 615 may also represent thresholds that differentiate between the various miss rates used in miss map 545 of FIG. 5. For example, if the average miss rate is below threshold 615-1, miss information 550 of FIG. 5 may be set to 0; if the average miss rate is between thresholds 615-1 and 615-2, miss information 550 of FIG. 5 may be set to 1; if the average miss rate is between thresholds 615-2 and 615-3, miss information 550 of FIG. 5 may be set to 2; and if the average miss rate is above threshold 615-3, miss information 550 of FIG. 5 may be set to 3. While FIG. 6 suggests that the same thresholds may be used for both heat map 525 of FIG. 5 and miss map 545 of FIG. 5, embodiments of the disclosure may use different thresholds for heat map 525 of FIG. 5 and miss map 545 of FIG. 5 (note that graphs 605 and 610 use different scales).

FIG. 7 shows a sequence of operations performed by tiered memory device 120 of FIG. 1, according to embodiments of the disclosure. In FIG. 7, processor 110 of FIG. 1 may issue request 705. Request 705 may include host address 710. Controller 315 may receive request 705 and provide host address to monitoring circuit 325. Monitoring circuit may then update access counts 515 of FIG. 5 for region 410 of FIG. 4 identified by region identifier 510 of FIG. 5, based on host address 710. Controller 315 may also inform monitoring circuit 325 whether the requested data was found in DRAM 305 of FIG. 3. If the data was not found in DRAM 305 of FIG. 3, then monitoring circuit 325 may also update miss counts 535 of FIG. 5 for region 410 of FIG. 4 identified by region identifier 510 of FIG. 5, based on host address 710. This update of access counts 515 of FIG. 5 and miss counts 535 of FIG. 5 may be done in block 715.

Periodically-for example, at scheduled intervals such as 1 ms-monitoring circuit 325 may generate heat map 525 and miss map 545. To generate heat map 525 and miss map 545, monitoring circuit 325 may calculate the average access and miss rates for each region 410 of FIG. 4, as shown at block 720. Average access rate 520 of FIG. 5 may be calculated as the sum of the old average access rates 520 of FIG. 5 and access counts 515 of FIG. 5, weighted by weight 725. That is, if w represents the weight, then the updated average access rate 520 of FIG. 5 may be calculated as *new average access rate* = (*old average access rate* × (1 - *w*)) + (*access count* ×*w*).

By scaling weight 725 between 0 and 1, various different effects may be achieved. If weight 725 is set to 0, then the old average access rate 520 of FIG. 5 is not factored into calculating the new average access rate 520 of FIG. 5. This choice for weight 725 means that historical information is discarded: since the historical information is not necessarily reflective of what is currently happening, this result might be acceptable. On the other hand, this choice for weight 725 may result in significant fluctuations in heat map 525 of FIG. 5, as the inclusion of older data may smooth out major changes in access counts 515 of FIG. 5, resulting in a more conservative heat map 525 of FIG. 5.

On the other hand, setting weight 725 to 1 would mean that access counts 515 of FIG. 5 are ignored, and the old values of average access rate 510 of FIG. 5 would be kept forever. While such a choice might be especially conservative, failing to factor in current information might mean that average access rates 510 of FIG. 5 are not accurate.

Thus, a choice for weight 725 somewhere between 0 and 1 would typically seem most useful.

Weight 725 may be set as a parameter of monitoring circuit 325 at the time of manufacture, or may be set by an administrator during use of tiered memory device 120 of FIG. 1. It is also possible for monitoring circuit 325 to adjust weight 725 dynamically: for example, if data access patterns reflect that data accessed previously is less likely to be used again, retaining historical information may be of little value, and weight 725 may be moved closer to 0. On the other hand, if data access patterns reflect that data accessed previously is more likely to be used again, retaining historical information may be of greater benefit, and weight 725 may be moved closer to 1. Any desired algorithm may be used to adjust weight 725 dynamically.

Average miss rates 540 of FIG. 5 may similarly be calculated using the old average miss rates 540 of FIG. 5 and miss counts 535 of FIG. 5. A similar formula as that shown above may be used to calculate the new average miss rate 540 of FIG. 5, using a weight to balance the impact of miss counts 535 of FIG. 5 on the update of average miss rates 540 of FIG. 5.

While FIG. 7 implies that the same weight 725 may be used to update both average access rates 520 of FIG. 5 and average miss rates 540 of FIG. 5, embodiments of the disclosure may use different weights for updating access rates 520 of FIG. 5 and average miss rates 540 of FIG. 5 as desired.

Once access rates 520 of FIG. 5 and average miss rates 540 of FIG. 5 have been updated, at block 730, monitoring circuit 325 may compare access rates 520 of FIG. 5 and average miss rates 540 of FIG. 5 with thresholds 615 of FIG. 6. By comparing access rates 520 of FIG. 5 and average miss rates 540 of FIG. 5 with thresholds 615 of FIG. 6, monitoring circuit 735 may generate heat map 525 of FIG. 5 and miss map 545 of FIG. 5, as shown at block 735.

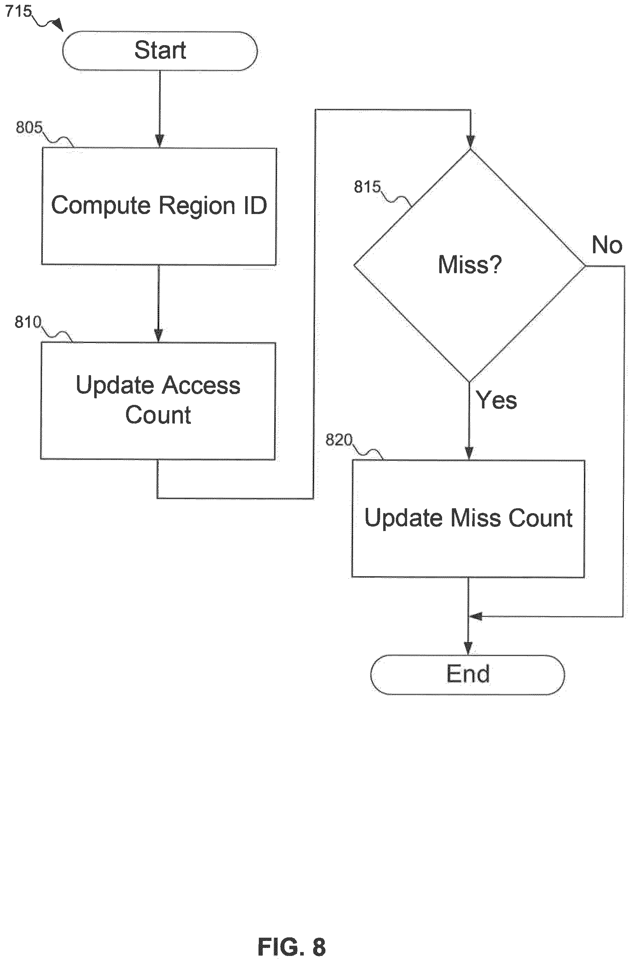

FIG. 8 shows details of the process for updating access counts 515 of FIG. 5 and miss counts 535 of FIG. 5 in tiered memory device 120 of FIG. 1, according to embodiments of the disclosure. In FIG. 8, at block 805, monitoring circuit 325 of FIG. 3 may compute region identifier 510 of FIG. 5 based on host address 710 of FIG. 7 from request 705 of FIG. 7. At block 810, monitoring circuit 325 of FIG. 3 may increment access count 515 of FIG. 5 for region 410 of FIG. 4 identified by region identifier 510 of FIG. 5. At block 815, monitoring circuit 325 of FIG. 3 may learn from controller 315 of FIG. 3 whether the data was found in DRAM 305 or not. If not, then a miss occurred, and at block 820 monitoring circuity may increment miss count 535 of FIG. 5.

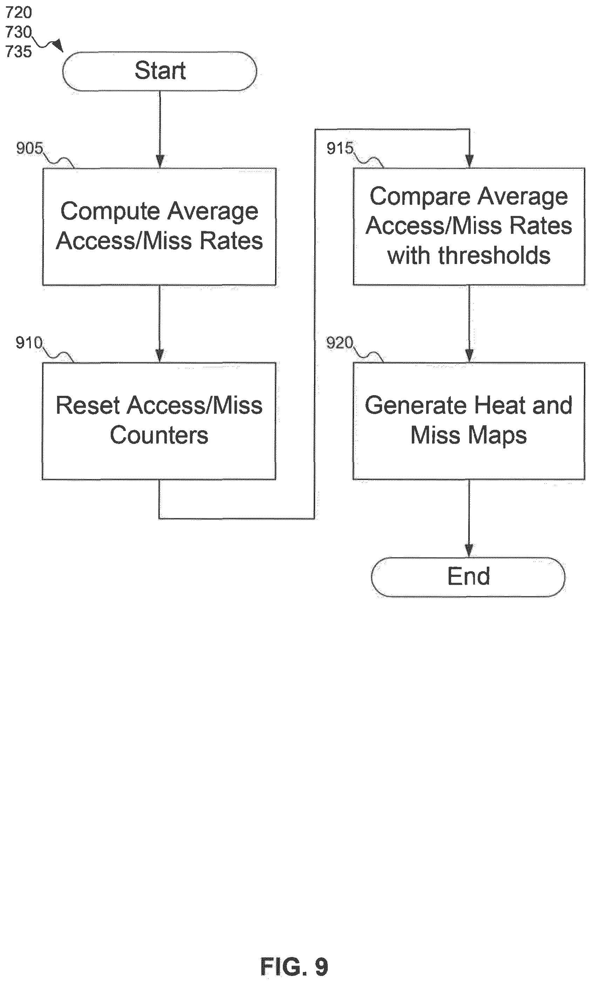

FIG. 9 shows details of the process for calculating average access rates 520 of FIG. 5 and average miss rates 540 of FIG. 5 and for generating the heat map 525 of FIG. 5 and miss map 545 of FIG. 5 in tiered memory device 120 of FIG. 1, according to embodiments of the disclosure. The operations shown in FIG. 9 may be performed periodically by monitoring circuit 325 of FIG. 3: for example, every 1 ms. In FIG. 9, at block 905, monitoring circuit 325 of FIG. 3 may compute average access rates 520 and average miss rates 540 of FIG. 5 based on the old average access rates 520 of FIG. 5, the old average access rates 540 of FIG. 5, access counts 515 of FIG. 5, miss counts 535, and weight(s) 725 of FIG. 7. At block 910, monitoring circuit 325 of FIG. 3 may reset access counts 515 and miss counts 535 of FIG. 5. At block 915, monitoring circuit 325 of FIG. 3 may compare average access rates 520 and average miss rages 540 of FIG. 5 with thresholds 615 of FIG. 6. Finally, at block 920, monitoring circuit 325 of FIG. 3 may generate heat map 525 and miss map 530 of FIG. 5 based on the comparison of average access rates 520 and average miss rates 540 of FIG. 5 with thresholds 615 of FIG. 6.

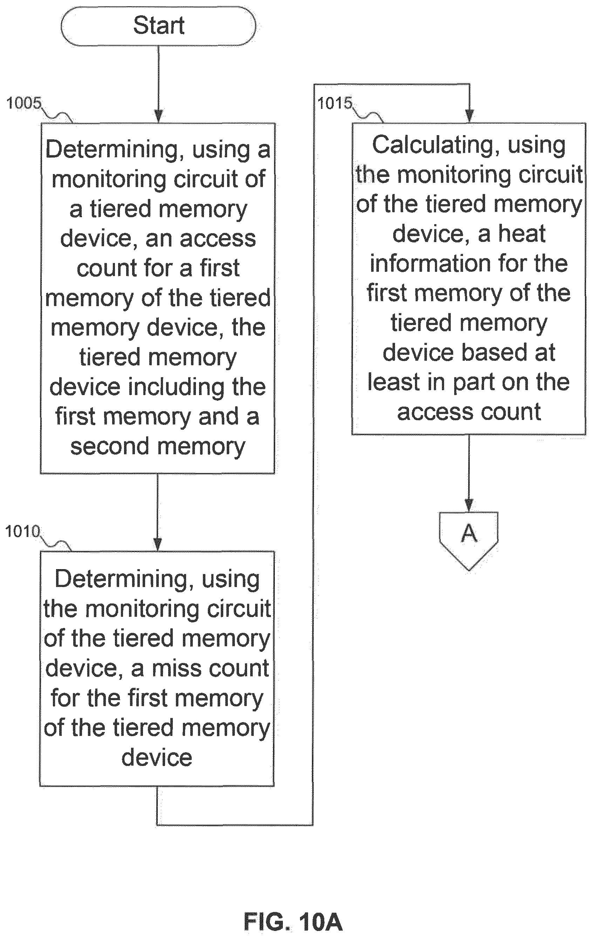

FIGs. 10A-10B show a flowchart of an example procedure for tiered memory device 120 of FIG. 1 to generate heat map 525 of FIG. 5 and miss map 530 of FIG. 5, according to embodiments of the disclosure. In FIG. 10A, at block 1005, monitoring circuit 325 may determine access count 515 for first memory 305 of tiered memory device 120. At block 1010, monitoring circuit 325 may determine miss count 535 for first memory 305. At block 1015, monitoring circuit 325 may calculate heat information 530 for first memory 305: heat information 530 may be calculated based in part on access count 515. (As discussed with reference to FIGs. 7 and 9 above, access count 515 may factor into the calculation of average access rate 520, which in turn may factor into the calculation of heat information 530.)

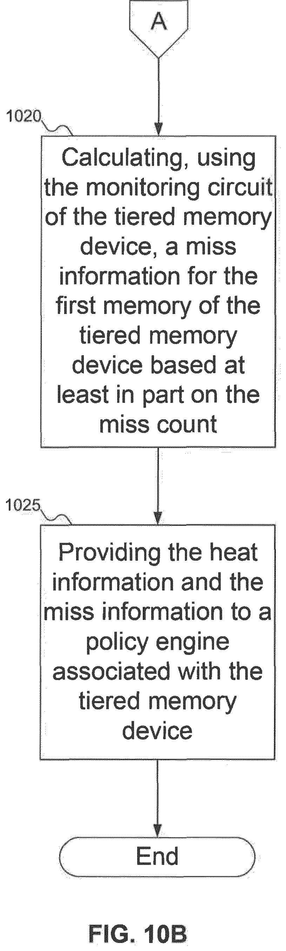

At block 1020 (FIG. 10B), monitoring circuit 325 may calculate miss information 550 for first memory 305: miss information 550 may be calculated based in part on miss count 535. (As discussed with reference to FIGs. 7 and 9 above, miss count 535 may factor into the calculation of average miss rate 540, which in turn may factor into the calculation of miss information 550.) Finally, at block 1025, monitoring circuit 325 may provide heat map 525 and miss map 545 to policy engine 320, so that policy engine 320 may use heat map 525 and miss map 545 in determining how aggressively to prefetch data from second memory 310 into first memory 305, and how aggressively to evict data from first memory 305.

In FIGs. 10A-10B, monitoring circuit 325 is described as operating with respect to first memory 305 as a whole: that is, only determining a single access count 515, a single miss count 535, a single heat information 530, and a single miss information 550. But embodiments of the disclosure may involve iterating the operations of FIGs. 10A-10B for different regions 410 in tiered memory device 120, rather than performing the operations of FIGs. 10A-10B only once.

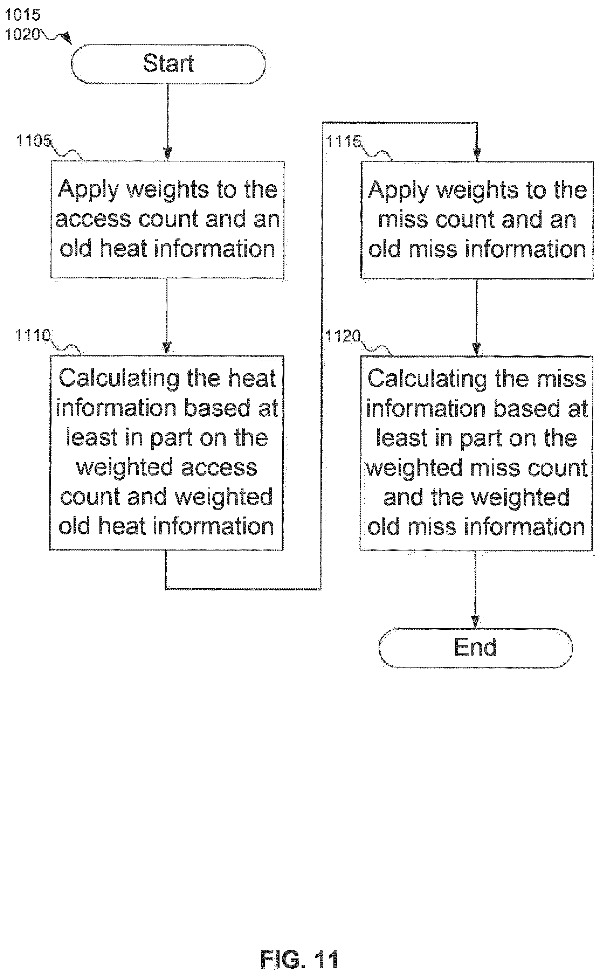

FIG. 11 shows a flowchart of an example procedure for tiered memory device 120 of FIG. 1 to calculate heat information 530 of FIG. 5 and miss information 550 of FIG. 5, according to embodiments of the disclosure. In FIG. 11, at block 1105, monitoring circuit 325 may determine weights to apply to access count 515 and a previous heat information 530 (which may be represented by average access rate 520). At block 1110, monitoring circuit 325 may calculate heat information 530 based on weighted access count 515 and the weighted old heat information 530 (or weighted average access rate 520).

At block 1115, monitoring circuit 325 may determine weights to apply to miss count 535 and a previous miss information 550 (which may be represented by average miss rate 540). At block 1120, monitoring circuit 325 may calculate miss information 550 based on weighted miss count 535 and the weighted old miss information 550 (or weighted average miss rate 540).

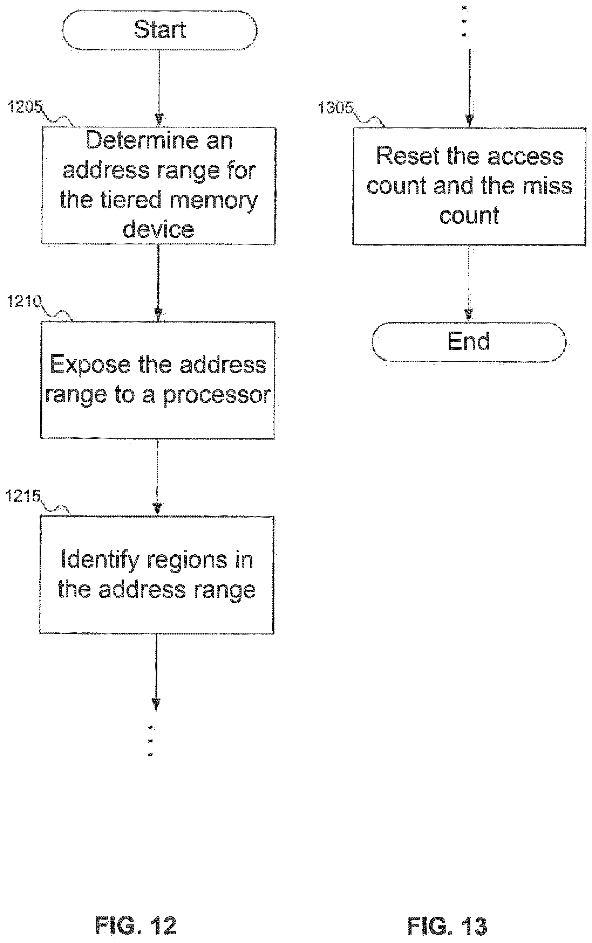

FIG. 12 shows a flowchart of an example procedure for tiered memory device 120 of FIG. 1 to expose address range 405 of FIG. 4 to processor 110 of FIG. 1 and to identify the regions 410 of FIG. 4 in address range 405 of FIG. 4, according to embodiments of the disclosure. The operations shown in FIG. 12 may be performed, for example, prior to the operations shown in FIGs. 10A-10B. In FIG. 12, at block 1205, tiered memory device 120 may determine address range 405 to expose to processor 110. As discussed with reference to FIG. 4 above, address range 405 may start at address 0x0000 and run to the maximum address exposed by tiered memory device 120, or address range 405 may start at a different address specified by machine 105. At block 1210, tiered memory device 120 may expose address range 405 to processor 110. Finally, at block 1215, monitoring circuit 325 may identify regions 410 in address range 405: for example, by dividing address range 405 into equally-sized regions 410 using a given region size.

FIG. 13 shows a flowchart of an example procedure for tiered memory device 120 of FIG. 1 to reset access counts 515 of FIG. 5 and miss counts 535 of FIG. 5, according to embodiments of the disclosure. The operations shown in FIG. 13 may be performed, for example, after blocks 1015 and 1020 of FIGs. 10A and 10B. In FIG. 1305, monitoring circuit 325 may set access counts 515 and miss counts 535 to zero, which may happen at the start of a new monitoring interval.

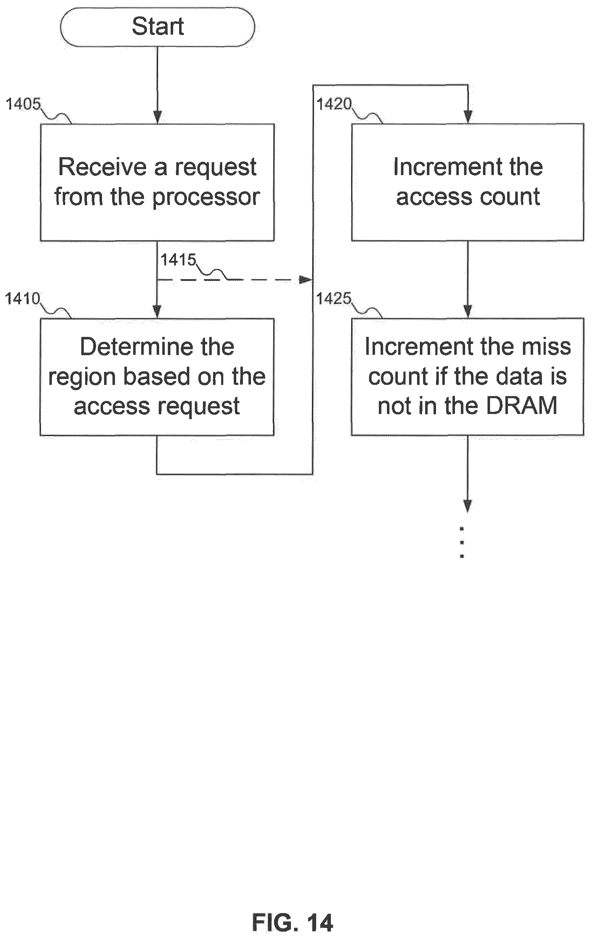

FIG. 14 shows a flowchart of an example procedure for tiered memory device 120 of FIG. 1 to account for access request 705 of FIG. 7 from processor 110 of FIG. 1, according to embodiments of the disclosure. The operations shown in FIG. 14 may be performed, for example, prior to the operations shown in FIGs. 10A-10B. In FIG. 14, at block 1405, controller 315 may receive request 705 from processor 110. At block 1410, monitoring circuit 325 may determine region identifier 510 based on host address 710 in request 705. Note that if monitoring circuit 325 does not divide address range 405 into regions 410, then block 1410 may be omitted, as shown by dashed line 1415. At block 1420, monitoring circuit 325 may increment access count 515. At block 1425, monitoring circuit 325 may determine whether host address 710 was found in first memory 305: if host address 710 was not found in first memory 305, then monitoring circuit 325 may increment miss count 535.

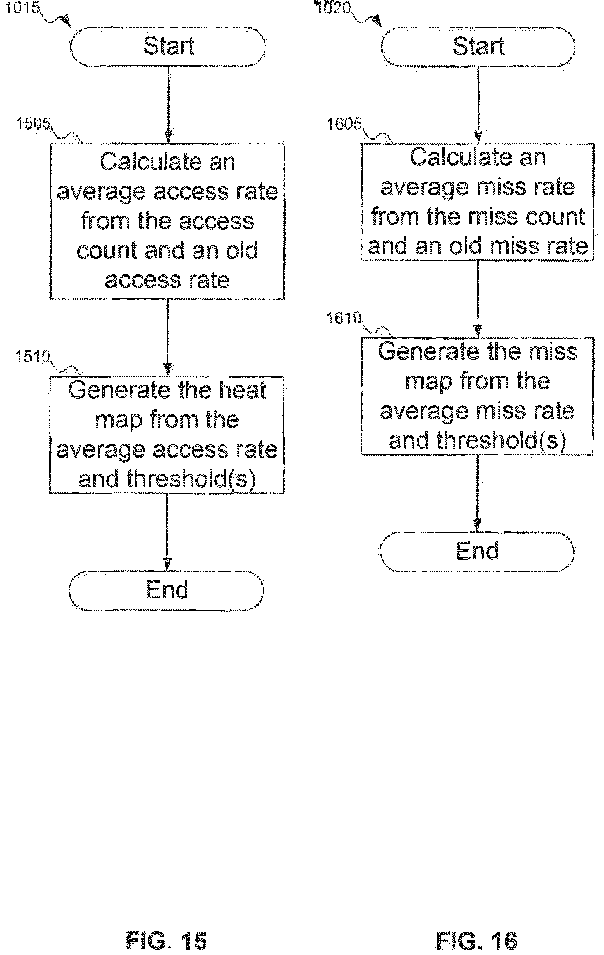

FIG. 15 shows a flowchart of an example procedure for tiered memory device 120 of FIG. 1 to generate heat map 525 of FIG. 5, according to embodiments of the disclosure. In FIG. 15, at block 1505, monitoring circuit 325 may calculate a new average access rate 520 from the old average access rate 520 and access count 515. Finally, at block 1510, monitoring circuit 325 may generate heat map 525 from average access rate 520 and thresholds 615.

FIG. 16 shows a flowchart of an example procedure for tiered memory device 120 of FIG. 1 to generate miss map 545 of FIG. 5, according to embodiments of the disclosure. In FIG. 16, at block 1605, monitoring circuit 325 may calculate a new average miss rate 540 from the old average miss rate 540 and miss count 535. Finally, at block 1510, monitoring circuit 325 may generate miss map 545 from average miss rate 540 and thresholds 615.

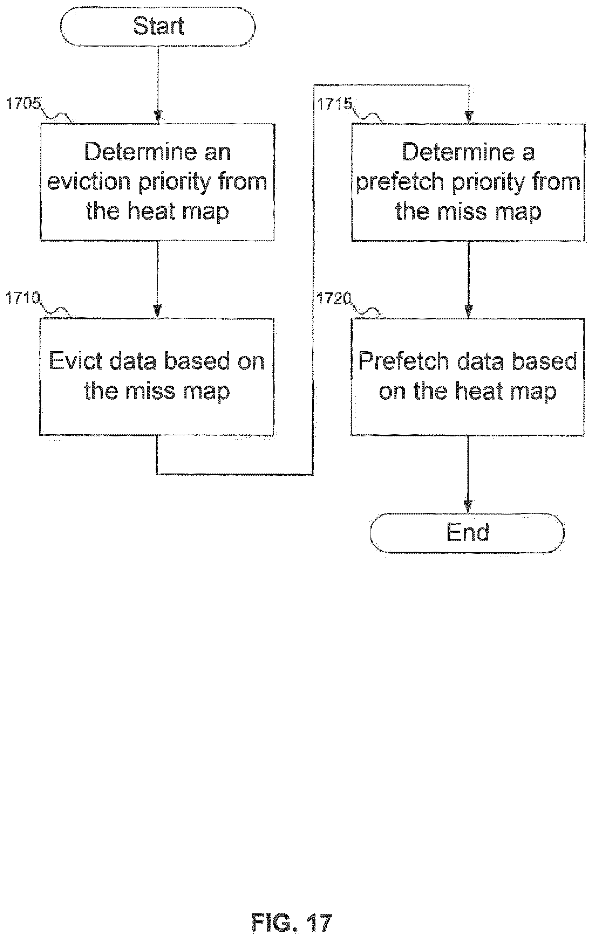

FIG. 17 shows a flowchart of an example procedure for the policy engine of FIG. 3 to use heat map 525 and of FIG. 5 miss map 545 of FIG. 5, according to embodiments of the disclosure. In FIG. 17, at block 1705, policy engine 320 may determine an eviction priority for data in first memory 305 based on heat map 525. At block 1710, policy engine 320 may evict data from first memory 305 based on miss map 545. This eviction may factor in the eviction priority calculated in block 1705. Note that if data in first memory 305 is dirty (that is, the data has been updated since it was loaded into first memory 305 from second memory 310), evicting the data may involve writing the updated data back to second memory 310.

At block 1715, policy engine 320 may determine a prefetch priority for data in first memory 305 based on miss map 545. At block 1720, policy engine 320 may prefetch data from second memory 305 into first memory 305 based on heat map 525. This prefetch may factor in the prefetch priority calculated in block 1715.

In FIGs. 10A-17, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Some embodiments of the disclosure may include a tiered memory device including a first memory and a second memory. A monitoring engine may monitor how data is accessed from the first memory based on requests from a processor. The monitoring engine may also monitor how often data is requested that is not currently in the first memory. The monitoring engine may generate heat and miss maps from this information, which may be provided to a policy engine. The policy engine may use the heat and miss maps to better determine what data to evict from the first memory and what data to prefetch from the second memory. The use of the heat and miss maps may offer a technical advantage in better selection of what data to evict and/or prefetch, which may improve the latency of the tiered memory device.

Many applications, including large Artificial Intelligence (AI) models, expect high memory capacity that exceeds the Dynamic Random Access Memory (DRAM) capacity of many data servers. One solution to address the high memory requirement while keeping the total cost of ownership (TCO) low is to expand the memory via Solid State Drives (SSDs). One way to do this is by exposing the SSD to the host as a memory component via a cache-coherent interconnect protocol, such as the CXL .mem protocol. While expanding the memory using the SSD can solve the memory capacity demand of those large AI models, there might be an impact on the performance of those AI applications by introducing a higher access latency to the SSD. One solution to lower SSD access latency is to use a caching technique to minimize the overall memory latency by storing the application's hot pages (more frequently accessed) in a faster memory (such as a cache). But detecting these hot pages and prefetching them ahead of time may be a challenging task since each application might have a different memory access pattern. Thus, providing insight into the application's access pattern by the hardware device may factor into improving the cache's effectiveness by reducing the overall latency of memory access in a tiered memory device.

Embodiments of the disclosure include a system and method for a large memory expansion device using a CXL interface. This device may advertise a large memory capacity, such as 1 terabyte (TB), 4 TB, 8 TB, 16 TB, etc. However, this device might have a relatively small amount of DRAM memory used as device side cache in conjunction with NAND-based large backup memory capacity. Embodiments of the disclosure may include a default device-side cache controller to handle runtime host memory accesses. Embodiments of the disclosure may improve page hit rates while decreasing miss rates to provide better latency performance to the host. Embodiments of the disclosure may include a method to dynamically monitor the heat map of the address range based on host accesses. Embodiments of the disclosure may also include a method to monitor the device cache miss. The heat map may be used as hints to prefetch hot pages to the cache or to evict the cold pages from the cache to make space for the new pages. Additionally, the miss map information of the host accesses may be used to adjust the rate of prefetch reads (i.e., how aggressively future data is brought into the cache) to minimize the miss rates.

Embodiments of the disclosure may include a tiered memory device. The tiered memory device may include support for memory load/store commands, as might be offered using the CXL.mem protocol. The tiered memory device may include, for example, 1 TB of NAND flash storage and 8 GB of DRAM as a cache: the sizes of the NAND flash storage and the cache may vary as desired. The cache may be an 8-way set associative device cache.

Data may be evicted from the cache based on a cache eviction policy, such as a Least Recently Used (LRU) or Least Frequently Used (LFU) policy, in combination with heat map based eviction. The cache may support prefetching and/or eviction based on a heat map policy. The policy engine may be part of a closed loop.

The tiered memory device may track host accesses. This tracking may track host load and/or store requests to the tiered memory device, as well as read and/or write hits/misses.

A heat map monitor may generate a heat map of regions of the tiered memory device based on the host access monitoring. A miss map monitor may compute a miss map of regions of the tiered memory device based on the read/write hit/miss monitoring.

The tiered memory device may include a device cache policy. The device cache policy may use the heat map to evict cold pages from the cache, and to prefetch hot pages into the cache. The device cache policy may also use the miss map to determine the rate of prefetch.

The device memory may be organized into regions. For example, each region might be 100 megabytes (MB) in size. The size of the regions may vary as desired.

Each region may be assigned a two-bit hotness and a two-bit miss rate. For example, a value of 0 may indicate cold data or a low miss rate, values of 1 or 2 may indicate warm data or a medium miss rate, and a value of 3 may indicate hot data or a high miss rate. The heat map and the miss rate may also use fewer or more than two bits each, and may be differently sized as desired.

Note that the same region may fluctuate differently in terms of its heat map and its miss map: the two do not have to fluctuate consistently for a region.

The region ID may be determined by dividing the host address by the size of a region, ignoring remainders. (This approach to determining a region ID assumes uniform region sizes: if region sizes may vary, then a mapping from a host address range to region ID may be used).

The average rate for a region may be determined by multiplying the access counter for the region by a weight, plus the current access rate multiplied by (1 minus the weight). The weight may be set by the host or the device, and may take on any value between 0 and 1 inclusive. The heat map for the region may then be determined by comparing the average rate for the region against three thresholds. So, for example, if the average rate is greater than one threshold, the heat map for the region may be set to 3; if the average rate is only greater than a second threshold, the heat map for the region may be set to 2; if the average rate is only greater than a third threshold, the heat map for the region may be set to 1; and if the average rate is not greater than any threshold, then the heat map may be set to 0. The thresholds may be set by the host or device, and may take on any desired values.

The average miss rate for a region may be determined by multiplying the miss counter for the region by a weight, plus the current miss rate multiplied by (1 minus the weight). The weight may be set by the host or the device, and may take on any value between 0 and 1 inclusive. The miss map for the region may then be determined by comparing the average miss rate for the region against three thresholds. So, for example, if the average miss rate is greater than one threshold, the heat map for the region may be set to 3; if the average miss rate is only greater than a second threshold, the heat map for the region may be set to 2; if the average miss rate is only greater than a third threshold, the heat map for the region may be set to 1; and if the average miss rate is not greater than any threshold, then the heat map may be set to 0. The thresholds may be set by the host or device, and may take on any desired values.

The device cache policy engine may use the miss map to determine how aggressively to prefetch various pages. For example, if the miss rate is high for a certain region, the device cache policy engine may perform prefetching at higher rate to attempt to improve the hit ratio and reduce the miss ratio for that region. On the other hand if the miss rate is low for some region, the device cache policy engine may perform prefetches at lower rate for that region.

Embodiments of the disclosure may include an application-agnostic operation of a device cache that may provide higher hit ratios and in turn lower latencies. Embodiments of the disclosure may lower the overhead of monitoring and maintenance of the device caches access heat map and miss rate. Embodiments of the disclosure may increase the accuracy of the performance tracking by allowing a fine granularity tracking method. Embodiments of the disclosure may provide flexibility to choose different granularities (region size) for profiling the host accesses.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

Embodiments of the disclosure may extend to the following statements, without limitation:
Statement 1. An embodiment of the disclosure includes a tiered memory device, comprising: a first memory; a second memory; a monitoring circuit to monitor the first memory to generate a heat map and a miss map based at least in part on a request received from a processor; and a policy engine to evict a first data from the first memory to the second memory and to prefetch a second data from the second memory to the first memory based at least in part on the heat map and the miss map.
Statement 2. An embodiment of the disclosure includes the tiered memory device according to statement 1, further comprising a controller to access data from the first memory and the second memory.
Statement 3. An embodiment of the disclosure includes the tiered memory device according to statement 2, wherein the controller includes the monitoring circuit.
Statement 4. An embodiment of the disclosure includes the tiered memory device according to statement 2, wherein the controller includes the policy engine.
Statement 5. An embodiment of the disclosure includes the tiered memory device according to statement 1, wherein the policy engine is separate from but associated with the tiered memory device.
Statement 6. An embodiment of the disclosure includes the tiered memory device according to statement 1, wherein: the tiered memory device exposes an address range to the processor; the address range is divided into a first region and a second region based at least in part on a region size; the heat map includes a first heat information for the first region and a second heat for the second region; and the miss map includes a first miss information for the first region and a second miss for the second region.
Statement 7. An embodiment of the disclosure includes the tiered memory device according to statement 1, wherein: the heat map includes a heat information regarding how often data is accessed by the processor; and the miss map includes a miss information regarding how often data is requested by the processor but is absent from the first memory.
Statement 8. An embodiment of the disclosure includes the tiered memory device according to statement 1, wherein the monitoring circuit is configured to update the heat map and the miss map periodically.
Statement 9. An embodiment of the disclosure includes the tiered memory device according to statement 8, wherein the monitoring circuit is configured update the heat map based at least in part on an access count and to update the miss map based at least in part on a miss count.
Statement 10. An embodiment of the disclosure includes the tiered memory device according to statement 9, wherein the monitoring circuit includes a weight to manage the update of the heat map based at least in part on the access count and to update the miss map based at least in part on the miss count.
Statement 11. An embodiment of the disclosure includes the tiered memory device according to statement 1, wherein the policy engine is configured to prefetch data from the second memory to the first memory based at least in part on the heat map including a high heat information.
Statement 12. An embodiment of the disclosure includes the tiered memory device according to statement 1, wherein the policy engine is configured to determine a prefetch priority to prefetch data from the second memory to the first memory based at least in part on the heat map including a high miss information.
Statement 13. An embodiment of the disclosure includes the tiered memory device according to statement 1, wherein the policy engine is configured to evict data from the first memory to the second memory based at least in part on the miss map including a high miss information.
Statement 14. An embodiment of the disclosure includes the tiered memory device according to statement 1, wherein the policy engine is configured to determine an eviction priority to evict data from the first memory to the second memory based at least in part on the heat map including a high heat information.
Statement 15. An embodiment of the disclosure includes a method, comprising: determining, using a monitoring circuit of a tiered memory device, an access count for a first memory of the tiered memory device, the tiered memory device including the first memory and a second memory; determining, using the monitoring circuit of the tiered memory device, a miss count for the first memory of the tiered memory device; calculating, using the monitoring circuit of the tiered memory device, a heat information for the first memory of the tiered memory device based at least in part on the access count; calculating, using the monitoring circuit of the tiered memory device, a miss information for the first memory of the tiered memory device based at least in part on the miss count; and providing the heat information and the miss information to a policy engine associated with the tiered memory device.
Statement 16. An embodiment of the disclosure includes the method according to statement 15, wherein the tiered memory device includes the policy engine.
Statement 17. An embodiment of the disclosure includes the method according to statement 15, wherein the tiered memory device includes a controller, the controller including the monitoring circuit.
Statement 18. An embodiment of the disclosure includes the method according to statement 15, wherein: calculating, using the monitoring circuit of the tiered memory device, the heat information for the first memory of the tiered memory device based at least in part on the access count includes calculating, using the monitoring circuit of the tiered memory device, the heat information for the first memory of the tiered memory device based at least in part on the access count and a second heat information; and calculating, using the monitoring circuit of the tiered memory device, the miss information for the first memory of the tiered memory device based at least in part on the miss count includes calculating, using the monitoring circuit of the tiered memory device, the miss information for the first memory of the tiered memory device based at least in part on the miss count and a second miss information.
Statement 19. An embodiment of the disclosure includes the method according to statement 18, wherein: calculating, using the monitoring circuit of the tiered memory device, the heat information for the first memory of the tiered memory device based at least in part on the access count and a second heat information includes applying a first weight to the access count and a second weight to the second heat information; and calculating, using the monitoring circuit of the tiered memory device, the miss information for the first memory of the tiered memory device based at least in part on the miss count and the second miss information includes applying a third weight to the miss count and a fourth weight to the second miss information.
Statement 20. An embodiment of the disclosure includes the method according to statement 15, wherein: calculating, using the monitoring circuit of the tiered memory device, the heat information for the first memory of the tiered memory device based at least in part on the access count includes calculating, using the monitoring circuit of the tiered memory device, the heat information for the first memory of the tiered memory device based at least in part on the access count and an average access rate; and calculating, using the monitoring circuit of the tiered memory device, the miss information for the first memory of the tiered memory device based at least in part on the miss count includes calculating, using the monitoring circuit of the tiered memory device, the miss information for the first memory of the tiered memory device based at least in part on the miss count and an average miss rate.
Statement 21. An embodiment of the disclosure includes the method according to statement 20, wherein: calculating, using the monitoring circuit of the tiered memory device, the heat information for the first memory of the tiered memory device based at least in part on the access count and an average access rate includes applying a first weight to the access count and a second weight to an average access rate; and calculating, using the monitoring circuit of the tiered memory device, the miss information for the first memory of the tiered memory device based at least in part on the miss count and an average miss rate includes applying a third weight to the miss count and a fourth weight to an average miss rate.
Statement 22. An embodiment of the disclosure includes the method according to statement 15, wherein the method further comprises: determining an address range for the tiered memory device; exposing the address range for the tiered memory device to a processor; and identifying a first region and a second region in the address range based at least in part on a region size; determining, using the monitoring circuit of the tiered memory device, the access count for the first memory of the tiered memory device includes determining, using the monitoring circuit of the tiered memory device, a first access count for the first region in the first memory of the tiered memory device and a second access count for the second region in the first memory of the tiered memory device; determining, using the monitoring circuit of the tiered memory device, a miss count for the first memory of the tiered memory device includes determining, using the monitoring circuit of the tiered memory device, a first miss count for the first region in the first memory of the tiered memory device and a second miss count for the second region in the first memory of the tiered memory device; calculating, using the monitoring circuit of the tiered memory device, a heat information for the first memory of the tiered memory device based at least in part on the access count includes: calculating, using the monitoring circuit of the tiered memory device, a first heat information for the first region in the first memory of the tiered memory device based at least in part on the first access count for the first region in the first memory of the tiered memory device; and calculating, using the monitoring circuit of the tiered memory device, a second heat information for the second region in the first memory of the tiered memory device based at least in part on the second access count for the second region in the first memory of the tiered memory device; and calculating, using the monitoring circuit of the tiered memory device, a miss information for the first memory of the tiered memory device based at least in part on the miss count includes: calculating, using the monitoring circuit of the tiered memory device, a first miss information for the first region in the first memory of the tiered memory device based at least in part on the first miss count for the first region in the first memory of the tiered memory device; and calculating, using the monitoring circuit of the tiered memory device, a second miss information for the second region in the first memory of the tiered memory device based at least in part on the second miss count for the second region in the first memory of the tiered memory device.
Statement 23. An embodiment of the disclosure includes the method according to statement 15, further comprising: receiving, at a controller of the tiered memory device, an access request from a processor; incrementing, by the monitoring circuit, the access count based at least in part receiving the access request from the processor; and incrementing, by the monitoring circuit, the miss count based at least in part on a data requested by the access request being in the first memory of the tiered memory device.
Statement 24. An embodiment of the disclosure includes the method according to statement 23, wherein: receiving, at the controller of the tiered memory device, the access request from a processor includes determining a region identifier for a first region in the first memory of the tiered memory device based at least in part on the access request, the first memory including the first region and a second region; incrementing, by the monitoring circuit, the access count based at least in part receiving the access request from the processor includes incrementing, by the monitoring circuit, a first access count associated with the region identifier associated with the first region in the first memory of the tiered memory device based at least in part on receiving the access request from the processor; and incrementing, by the monitoring circuit, the miss count based at least in part on a data requested by the access request being in the first memory includes incrementing, by the monitoring circuit, a first miss count associated with the region identifier associated with the first region in the first memory of the tiered memory device based at least in part on the data requested by the access request being in the first region in first memory of the tiered memory device.
Statement 25. An embodiment of the disclosure includes the method according to statement 24, wherein: the first region includes a first set of addresses exposed to the processor by the tiered memory device; the second region includes a second set of addresses exposed to the processor by the tiered memory device; and the first set of addresses is distinct from the second set of addresses.
Statement 26. An embodiment of the disclosure includes the method according to statement 15, further comprising resetting the access count and the miss count based at least in part on calculating the heat information for the first memory of the tiered memory device and the miss information for the first memory of the tiered memory device.
Statement 27. An embodiment of the disclosure includes the method according to statement 15, wherein: calculating, using the monitoring circuit of the tiered memory device, the heat information for the first memory of the tiered memory device based at least in part on the access count includes: calculating an average access rate for the first memory of the tiered memory device based at least in part on the access count; and calculating the heat information for the first memory of the tiered memory device from the average access rate for the first memory of the tiered memory device; and calculating, using the monitoring circuit of the tiered memory device, the miss information for the first memory of the tiered memory device based at least in part on the miss count includes: calculating an average miss rate for the first memory of the tiered memory device based at least in part on the miss count; and calculating the miss information for the first memory of the tiered memory device from the average miss rate for the first memory of the tiered memory device.
Statement 28. An embodiment of the disclosure includes the method according to statement 27, wherein: calculating the heat information for the first memory of the tiered memory device from the average access rate for the first memory of the tiered memory device includes calculating the heat information for the first memory of the tiered memory device based at least in part on comparing the average access rate for the first memory of the tiered memory device against a first threshold; and calculating the miss information for the first memory of the tiered memory device from the average miss rate for the first memory of the tiered memory device includes calculating the miss information for the first memory of the tiered memory device based at least in part on comparing the average miss rate for the first memory of the tiered memory device against a second threshold.
Statement 29. An embodiment of the disclosure includes the method according to statement 15, further comprising prefetching, by the policy engine, a data from the second memory into the first memory based at least in part on the heat information for the first memory of the tiered memory device.
Statement 30. An embodiment of the disclosure includes the method according to statement 15, further comprising determining a prefetch priority for a data from the second memory into the first memory based at least in part on the miss information for the first memory of the tiered memory device.
Statement 31. An embodiment of the disclosure includes the method according to statement 15, further comprising evicting, by the policy engine, a data from the first memory to the second memory based at least in part on the miss information for the first memory of the tiered memory device.
Statement 32. An embodiment of the disclosure includes the method according to statement 15, further comprising determining an eviction priority for a data from the first memory to the second memory based at least in part on the heat information for the first memory of the tiered memory device.
Statement 33. An embodiment of the disclosure includes an article, comprising a non-transitory storage medium, the non-transitory storage medium having stored thereon instructions that, when executed by a machine, result in: determining, using a monitoring circuit of a tiered memory device, an access count for a first memory of the tiered memory device, the tiered memory device including the first memory and a second memory; determining, using the monitoring circuit of the tiered memory device, a miss count for the first memory of the tiered memory device; calculating, using the monitoring circuit of the tiered memory device, a heat information for the first memory of the tiered memory device based at least in part on the access count; calculating, using the monitoring circuit of the tiered memory device, a miss information for the first memory of the tiered memory device based at least in part on the miss count; and
   providing the heat information and the miss information to a policy engine associated with the tiered memory device.
Statement 34. An embodiment of the disclosure includes the article according to statement 33, wherein the tiered memory device includes the policy engine.
Statement 35. An embodiment of the disclosure includes the article according to statement 33, wherein the tiered memory device includes a controller, the controller including the monitoring circuit.
Statement 36. An embodiment of the disclosure includes the article according to statement 33, wherein: calculating, using the monitoring circuit of the tiered memory device, the heat information for the first memory of the tiered memory device based at least in part on the access count includes calculating, using the monitoring circuit of the tiered memory device, the heat information for the first memory of the tiered memory device based at least in part on the access count and a second heat information; and calculating, using the monitoring circuit of the tiered memory device, the miss information for the first memory of the tiered memory device based at least in part on the miss count includes calculating, using the monitoring circuit of the tiered memory device, the miss information for the first memory of the tiered memory device based at least in part on the miss count and a second miss information.
Statement 37. An embodiment of the disclosure includes the article according to statement 36, wherein: calculating, using the monitoring circuit of the tiered memory device, the heat information for the first memory of the tiered memory device based at least in part on the access count and a second heat information includes applying a first weight to the access count and a second weight to the second heat information; and calculating, using the monitoring circuit of the tiered memory device, the miss information for the first memory of the tiered memory device based at least in part on the miss count and the second miss information includes applying a third weight to the miss count and a fourth weight to the second miss information.
Statement 38. An embodiment of the disclosure includes the article according to statement 33, wherein: calculating, using the monitoring circuit of the tiered memory device, the heat information for the first memory of the tiered memory device based at least in part on the access count includes calculating, using the monitoring circuit of the tiered memory device, the heat information for the first memory of the tiered memory device based at least in part on the access count and an average access rate; and calculating, using the monitoring circuit of the tiered memory device, the miss information for the first memory of the tiered memory device based at least in part on the miss count includes calculating, using the monitoring circuit of the tiered memory device, the miss information for the first memory of the tiered memory device based at least in part on the miss count and an average miss rate.
Statement 39. An embodiment of the disclosure includes the article according to statement 38, wherein: calculating, using the monitoring circuit of the tiered memory device, the heat information for the first memory of the tiered memory device based at least in part on the access count and an average access rate includes applying a first weight to the access count and a second weight to an average access rate; and calculating, using the monitoring circuit of the tiered memory device, the miss information for the first memory of the tiered memory device based at least in part on the miss count and an average miss rate includes applying a third weight to the miss count and a fourth weight to an average miss rate.
Statement 40. An embodiment of the disclosure includes the article according to statement 33, wherein: the non-transitory storage medium has stored thereon further instructions that, when executed by the machine, result in: determining an address range for the tiered memory device; exposing the address range for the tiered memory device to a processor; and identifying a first region and a second region in the address range based at least in part on a region size; determining, using the monitoring circuit of the tiered memory device, the access count for the first memory of the tiered memory device includes determining, using the monitoring circuit of the tiered memory device, a first access count for the first region in the first memory of the tiered memory device and a second access count for the second region in the first memory of the tiered memory device; determining, using the monitoring circuit of the tiered memory device, a miss count for the first memory of the tiered memory device includes determining, using the monitoring circuit of the tiered memory device, a first miss count for the first region in the first memory of the tiered memory device and a second miss count for the second region in the first memory of the tiered memory device; calculating, using the monitoring circuit of the tiered memory device, a heat information for the first memory of the tiered memory device based at least in part on the access count includes: calculating, using the monitoring circuit of the tiered memory device, a first heat information for the first region in the first memory of the tiered memory device based at least in part on the first access count for the first region in the first memory of the tiered memory device; and calculating, using the monitoring circuit of the tiered memory device, a second heat information for the second region in the first memory of the tiered memory device based at least in part on the second access count for the second region in the first memory of the tiered memory device; and calculating, using the monitoring circuit of the tiered memory device, a miss information for the first memory of the tiered memory device based at least in part on the miss count includes: calculating, using the monitoring circuit of the tiered memory device, a first miss information for the first region in the first memory of the tiered memory device based at least in part on the first miss count for the first region in the first memory of the tiered memory device; and calculating, using the monitoring circuit of the tiered memory device, a second miss information for the second region in the first memory of the tiered memory device based at least in part on the second miss count for the second region in the first memory of the tiered memory device.
Statement 41. An embodiment of the disclosure includes the article according to statement 33, the non-transitory storage medium having stored thereon further instructions that, when executed by the machine, result in: receiving, at a controller of the tiered memory device, an access request from a processor; incrementing, by the monitoring circuit, the access count based at least in part receiving the access request from the processor; and incrementing, by the monitoring circuit, the miss count based at least in part on a data requested by the access request being in the first memory of the tiered memory device.
Statement 42. An embodiment of the disclosure includes the article according to statement 41, wherein: receiving, at the controller of the tiered memory device, the access request from a processor includes determining a region identifier for a first region in the first memory of the tiered memory device based at least in part on the access request, the first memory including the first region and a second region; incrementing, by the monitoring circuit, the access count based at least in part receiving the access request from the processor includes incrementing, by the monitoring circuit, a first access count associated with the region identifier associated with the first region in the first memory of the tiered memory device based at least in part on receiving the access request from the processor; and incrementing, by the monitoring circuit, the miss count based at least in part on a data requested by the access request being in the first memory includes incrementing, by the monitoring circuit, a first miss count associated with the region identifier associated with the first region in the first memory of the tiered memory device based at least in part on the data requested by the access request being in the first region in first memory of the tiered memory device.
Statement 43. An embodiment of the disclosure includes the article according to statement 42, wherein: the first region includes a first set of addresses exposed to the processor by the tiered memory device; the second region includes a second set of addresses exposed to the processor by the tiered memory device; and the first set of addresses is distinct from the second set of addresses.
Statement 44. An embodiment of the disclosure includes the article according to statement 33, the non-transitory storage medium having stored thereon further instructions that, when executed by the machine, result in resetting the access count and the miss count based at least in part on calculating the heat information for the first memory of the tiered memory device and the miss information for the first memory of the tiered memory device.
Statement 45. An embodiment of the disclosure includes the article according to statement 33, wherein: calculating, using the monitoring circuit of the tiered memory device, the heat information for the first memory of the tiered memory device based at least in part on the access count includes: calculating an average access rate for the first memory of the tiered memory device based at least in part on the access count; and calculating the heat information for the first memory of the tiered memory device from the average access rate for the first memory of the tiered memory device; and calculating, using the monitoring circuit of the tiered memory device, the miss information for the first memory of the tiered memory device based at least in part on the miss count includes: calculating an average miss rate for the first memory of the tiered memory device based at least in part on the miss count; and calculating the miss information for the first memory of the tiered memory device from the average miss rate for the first memory of the tiered memory device.
Statement 46. An embodiment of the disclosure includes the article according to statement 45, wherein: calculating the heat information for the first memory of the tiered memory device from the average access rate for the first memory of the tiered memory device includes calculating the heat information for the first memory of the tiered memory device based at least in part on comparing the average access rate for the first memory of the tiered memory device against a first threshold; and calculating the miss information for the first memory of the tiered memory device from the average miss rate for the first memory of the tiered memory device includes calculating the miss information for the first memory of the tiered memory device based at least in part on comparing the average miss rate for the first memory of the tiered memory device against a second threshold.
Statement 47. An embodiment of the disclosure includes the article according to statement 33, the non-transitory storage medium having stored thereon further instructions that, when executed by the machine, result in prefetching, by the policy engine, a data from the second memory into the first memory based at least in part on the heat information for the first memory of the tiered memory device.
Statement 48. An embodiment of the disclosure includes the article according to statement 33, the non-transitory storage medium having stored thereon further instructions that, when executed by the machine, result in determining a prefetch priority for a data from the second memory into the first memory based at least in part on the miss information for the first memory of the tiered memory device.
Statement 49. An embodiment of the disclosure includes the article according to statement 33, the non-transitory storage medium having stored thereon further instructions that, when executed by the machine, result in evicting, by the policy engine, a data from the first memory to the second memory based at least in part on the miss information for the first memory of the tiered memory device.
Statement 50. An embodiment of the disclosure includes the article according to statement 33, the non-transitory storage medium having stored thereon further instructions that, when executed by the machine, result in determining an eviction priority for a data from the first memory to the second memory based at least in part on the heat information for the first memory of the tiered memory device.

Consequently, in view of the wide variety of permutations to the embodiments described herein, this detailed description and accompanying material is intended to be illustrative only, and should not be taken as limiting the scope of the disclosure. What is claimed as the disclosure, therefore, is all such modifications as may come within the scope of the following claims.

## Claims

1. A tiered memory device, comprising:
a first memory;
a second memory;
a monitoring circuit to monitor the first memory to generate a heat map and a miss map based at least in part on a request received from a processor; and
a policy engine to evict a first data from the first memory to the second memory and to prefetch a second data from the second memory to the first memory based at least in part on the heat map and the miss map.

2. The tiered memory device according to claim 1, wherein:
the tiered memory device exposes an address range to the processor;
the address range is divided into a first region and a second region based at least in part on a region size;
the heat map includes a first heat information for the first region and a second heat for the second region; and
the miss map includes a first miss information for the first region and a second miss for the second region.

3. The tiered memory device according to claim 1 or 2, wherein:
the heat map includes a heat information regarding how often data is accessed by the processor; and
the miss map includes a miss information regarding how often data is requested by the processor but is absent from the first memory.

4. The tiered memory device according to any one of claims 1 to 3, wherein the monitoring circuit is configured to update the heat map and the miss map periodically.

5. A method, comprising:
determining, using a monitoring circuit of a tiered memory device, an access count for a first memory of the tiered memory device, the tiered memory device including the first memory and a second memory;
determining, using the monitoring circuit of the tiered memory device, a miss count for the first memory of the tiered memory device;
calculating, using the monitoring circuit of the tiered memory device, a heat information for the first memory of the tiered memory device based at least in part on the access count;
calculating, using the monitoring circuit of the tiered memory device, a miss information for the first memory of the tiered memory device based at least in part on the miss count; and
providing the heat information and the miss information to a policy engine associated with the tiered memory device.

6. The method according to claim 5, wherein:
calculating, using the monitoring circuit of the tiered memory device, the heat information for the first memory of the tiered memory device based at least in part on the access count includes calculating, using the monitoring circuit of the tiered memory device, the heat information for the first memory of the tiered memory device based at least in part on the access count and an average access rate; and
calculating, using the monitoring circuit of the tiered memory device, the miss information for the first memory of the tiered memory device based at least in part on the miss count includes calculating, using the monitoring circuit of the tiered memory device, the miss information for the first memory of the tiered memory device based at least in part on the miss count and an average miss rate.

7. The method according to claim 6, wherein:
calculating, using the monitoring circuit of the tiered memory device, the heat information for the first memory of the tiered memory device based at least in part on the access count and an average access rate includes applying a first weight to the access count and a second weight to an average access rate; and
calculating, using the monitoring circuit of the tiered memory device, the miss information for the first memory of the tiered memory device based at least in part on the miss count and an average miss rate includes applying a third weight to the miss count and a fourth weight to an average miss rate.

8. The method according to claim 5, wherein:
the method further comprises:
determining an address range for the tiered memory device;
exposing the address range for the tiered memory device to a processor; and
identifying a first region and a second region in the address range based at least in part on a region size;
determining, using the monitoring circuit of the tiered memory device, the access count for the first memory of the tiered memory device includes determining, using the monitoring circuit of the tiered memory device, a first access count for the first region in the first memory of the tiered memory device and a second access count for the second region in the first memory of the tiered memory device;
determining, using the monitoring circuit of the tiered memory device, a miss count for the first memory of the tiered memory device includes determining, using the monitoring circuit of the tiered memory device, a first miss count for the first region in the first memory of the tiered memory device and a second miss count for the second region in the first memory of the tiered memory device;
calculating, using the monitoring circuit of the tiered memory device, the heat information for the first memory of the tiered memory device based at least in part on the access count includes:
calculating, using the monitoring circuit of the tiered memory device, a first heat information for the first region in the first memory of the tiered memory device based at least in part on the first access count for the first region in the first memory of the tiered memory device; and
calculating, using the monitoring circuit of the tiered memory device, a second heat information for the second region in the first memory of the tiered memory device based at least in part on the second access count for the second region in the first memory of the tiered memory device; and
calculating, using the monitoring circuit of the tiered memory device, a miss information for the first memory of the tiered memory device based at least in part on the miss count includes:
calculating, using the monitoring circuit of the tiered memory device, a first miss information for the first region in the first memory of the tiered memory device based at least in part on the first miss count for the first region in the first memory of the tiered memory device; and
calculating, using the monitoring circuit of the tiered memory device, a second miss information for the second region in the first memory of the tiered memory device based at least in part on the second miss count for the second region in the first memory of the tiered memory device.

9. The method according to any one of claims 5 to 8, further comprising:
receiving, at a controller of the tiered memory device, an access request from a processor;
incrementing, by the monitoring circuit, the access count based at least in part receiving the access request from the processor; and
incrementing, by the monitoring circuit, the miss count based at least in part on a data requested by the access request being in the first memory of the tiered memory device.

10. The method according to claim 9, wherein:
receiving, at the controller of the tiered memory device, the access request from a processor includes determining a region identifier for a first region in the first memory of the tiered memory device based at least in part on the access request, the first memory including the first region and a second region;
incrementing, by the monitoring circuit, the access count based at least in part receiving the access request from the processor includes incrementing, by the monitoring circuit, a first access count associated with the region identifier associated with the first region in the first memory of the tiered memory device based at least in part on receiving the access request from the processor; and
incrementing, by the monitoring circuit, the miss count based at least in part on a data requested by the access request being in the first memory includes incrementing, by the monitoring circuit, a first miss count associated with the region identifier associated with the first region in the first memory of the tiered memory device based at least in part on the data requested by the access request being in the first region in first memory of the tiered memory device.

11. The method according to claim 10, wherein:
the first region includes a first set of addresses exposed to the processor by the tiered memory device;
the second region includes a second set of addresses exposed to the processor by the tiered memory device; and
the first set of addresses is distinct from the second set of addresses.

12. The method according to any one of claims 5 to 11, further comprising resetting the access count and the miss count based at least in part on calculating the heat information for the first memory of the tiered memory device and the miss information for the first memory of the tiered memory device.

13. The method according to claim 5, wherein:
calculating, using the monitoring circuit of the tiered memory device, the heat information for the first memory of the tiered memory device based at least in part on the access count includes:
calculating an average access rate for the first memory of the tiered memory device based at least in part on the access count; and
calculating the heat information for the first memory of the tiered memory device from the average access rate for the first memory of the tiered memory device; and
calculating, using the monitoring circuit of the tiered memory device, the miss information for the first memory of the tiered memory device based at least in part on the miss count includes:
calculating an average miss rate for the first memory of the tiered memory device based at least in part on the miss count; and
calculating the miss information for the first memory of the tiered memory device from the average miss rate for the first memory of the tiered memory device.

14. The method according to claim 13, wherein:
calculating the heat information for the first memory of the tiered memory device from the average access rate for the first memory of the tiered memory device includes calculating the heat information for the first memory of the tiered memory device based at least in part on comparing the average access rate for the first memory of the tiered memory device against a first threshold; and
calculating the miss information for the first memory of the tiered memory device from the average miss rate for the first memory of the tiered memory device includes calculating the miss information for the first memory of the tiered memory device based at least in part on comparing the average miss rate for the first memory of the tiered memory device against a second threshold.

15. The method according to any one of claims 5 to 14, further comprising prefetching, by the policy engine, a data from the second memory into the first memory based at least in part on the heat information for the first memory of the tiered memory device.
